# EUROPEAN PATENT APPLICATION

(11) **EP 4 184 612 A1**
(43) Date of publication of application: **24.05.2023**
(21) Application number: 22856862.2
(22) Date of filing: 27.05.2022
(51) Int. Cl.: H01M 4/36, H01M 4/62

(54) **NEGATIVE ELECTRODE MATERIAL AND PREPARATION METHOD THEREFOR, AND LITHIUM-ION BATTERY**

(30) Priority: 25.08.2021 CN 202110983444
(71) Applicant: BTR NEW MATERIAL GROUP CO., LTD., Shenzhen, Guangdong 518106 (CN); Dingyuan New Energy Technology Co., Ltd., Huizhou, Guangdong 516227 (CN)
(72) Inventor: XIAO, Chengmao, Shenzhen, Guangdong 518106 (CN); HE, Peng, Shenzhen, Guangdong 518106 (CN); REN, Jianguo, Shenzhen, Guangdong 518106 (CN); HE, Xueqin, Shenzhen, Guangdong 518106 (CN)
(74) Representative: Müller Schupfner & Partner Patent- und Rechtsanwaltspartnerschaft mbB
(86) International application number: PCT/CN2022/095693
(87) International publication number: WO 2023/024625

(57) **Abstract**

The present application relates to the field of anode material, providing an anode material and a preparation method thereof, and a lithium ion battery, where the anode material, includes an aggregate, the aggregate includes an active material, a carbon material, and a conductive enhancer; where the conductive enhancer has a tensile strength of ≥500 MPa, and a dispersibility N in the anode material of ≥1; where the dispersibility N is obtained by the following test method: dividing a SEM section of an anode material particle into regions with area of A×B, where A and B are both ≤1 micron, counting the distribution of the conductive enhancer within all of the regions of single the anode material particle, seting number of regions having the conductive enhancer with a spacing to each other of <10 nm as Na, seting number of regions having the conductive enhancer with a spacing to each other all of ≥10nm as Nb, and defining dispersibility C of the conductive enhancer in single the anode material particle as C = Nb/Na, where N is the arithmetic average of C values of any 5 of the anode material particles. The node material can be effectively suppressed, improving cell cycle performance.

## Description

### CROSS-REFERENCE TO RELATED APPLICATIONS

This application claims the benefit of priority to Chinese Patent Application No. 2021109834441, titled "ANODE MATERIAL AND PREPARATION METHOD THEREOF, AND LITHIUM ION BATTERY" filed to CNIPA on August 25, 2021, the entire contents of which is incorporated herein by reference.

### TECHNICAL FIELD

The present application relates to the filed of an anode material and, in particular, to an anode material and a preparation method thereof, and a lithium ion battery

### BACKGROUND

Electrified new energy vehicle is the future development direction of the automotive market, its core component is lithium ion battery. With the development of the market, the demand for a high-capacity density battery is getting higher and higher. The use of new high-specific capacity cathode and anode materials is one of the important ways to improve the energy density of battery.

More and more new materials, such as metal, oxide, metal alloy, and so on, are applied as active material in anode material, to continually explore various ways to improve the energy density of battery. As an example of a silicon-based anode material, the silicon-based anode material, as one of the above active material, is generally believed to be the next generation of anode material, it has ultra-high theoretical specific capacity (4200 mAh/g) and lower deintercalating lithium potential (<0.5 V). Further, the voltage plateau of silicon is slightly higher than graphite, the advantages of being difficult to cause surface lithium precipitation during charging and better safety performance, and so on make it highly praised. However, there is a repeated expansion-shrinkage effect during charge and discharge of the silicon-based anode material, a volume change rate is high. The SEI film formed on surface is also broken during expansion-shrinkage process, exposing new interfaces, which continue to form new SEI film. The SEI outside continues to be thickened, leading to poor cycling performance of battery. The ubiquitous volume expansion problem in anode material limits the further application of these materials.

Therefore, how to suppress the volume expansion of anode material and improve cycling stability is an urgent problem to be solved at present.

### SUMMARY

In view of this, it is necessary to provide an anode material and a preparation method thereof, and a lithium ion battery, the volume expansion of the anode material can be effectively suppressed, improving cell cycle performance.

In a first aspect, the present application provides an anode material, including an aggregate,
the aggregate includes an active material, a carbon material, and a conductive enhancer; where the conductive enhancer has a tensile strength of ≥500 MPa, and a dispersibility N in the anode material of ≥1;
where the dispersibility N is obtained by the following test method:
   dividing a SEM section of an anode material particle into regions with area of A×B, where A and B are both ≤1 micron, counting the distribution of the conductive enhancer within all of the regions of single the anode material particle, seting number of regions having the conductive enhancer with a spacing to each other of <10 nm as Na, seting number of regions having the conductive enhancer with a spacing to each other all of ≥10 nm as Nb, and defining dispersibility C of the conductive enhancer in single the anode material particle as C = Nb/Na, where N is the arithmetic average of C values of any 5 of the anode material particles.

In the above solution, the anode material includes an aggregate, the aggregate includes an active material, a carbon material, and a conductive enhancer, where the conductive enhancer has a tensile strength of £500 MPa, and a dispersibility N in the anode material of ≥1. An uniform dispersion of the conductive enhancer effectively improve transport of charge carrier inside the aggregate, enhancing conductivity of the aggregate; a conductive material having a tensile strength of £500 MPa is selected as the conductive enhancer, such that the conductive enhancer has a excellent mechanical property, while controlling the dispersibility N of the conductive enhancer to z1 makes the conductive enhancer being uniformly distributed in the anode material. The conductive enhancer can play a role of a support for the structure to enhance the stability of the material. The conductive enhancer can be filled with the active material between them, for reducing stress change caused by expansion of the active material and strengthening structure strength of the aggregate. It is verified that the above anode material have a low expansion rate and a good cycling stability.

In an embodiment, the conductive enhancer is distributed in the active material, and the carbon material is filled between the active material and the conductive enhancer.

In an embodiment, there are pores between the carbon material and the conductive enhancer, and the pores are filled with the active material.

In an embodiment, the conductive enhancer includes at least one of an alloy material and a conductive carbon.

In an embodiment, the conductive carbon includes at least one of carbon nanotube, carbon fiber, and graphite fiber.

In an embodiment, a mass ratio of the active material, the carbon material, and the conductive enhancer is (20-70):(10-70):(3-20).

In an embodiment, the conductive enhancer is in a form of sheet and/or strip shape, and the conductive enhancer has an aspect ratio of 2 to 3000.

In an embodiment, the conductive enhancer has a conductivity of >10² S/m.

In an embodiment, the conductive enhancer has an aspect ratio of 2 to 3000.

In an embodiment, the aggregate further includes a metal oxide.

In an embodiment, the metal oxide has a chemical formula of MₓO_{y}, 0.2≤y/x≤3, where M includes at least one of Sn, Ge, Si, Fe, Cu, Ti, Na, Mg, AI, Ca, and Zn.

In an embodiment, the metal oxide is in a form of sheet and/or strip shape, and the metal oxide has an aspect ratio greater than 2.

In an embodiment, a mass ratio of the metal oxide and the active material is (1-20):100.

In an embodiment, the active material includes at least one of Li, Na, K, Sn, Ge, Si, SiO, Fe, Mg, Ti, Zn, Al, P, and Cu.

In an embodiment, the active material has a median particle diameter of 1 nm to 500 nm.

In an embodiment, the carbon material includes at least one of amorphous carbon, crystalline carbon, hard carbon, soft carbon, and mesocarbon microbead.

In an embodiment, the anode material further includes a carbon layer coated on at least a portion of surface of the aggregate.

In an embodiment, a material of the carbon layer includes amorphous carbon.

In an embodiment, the carbon layer has a thickness of 10 nm to 1500 nm.

In an embodiment, the anode material has a median particle diameter of 0.5 µm to 30 µm.

In an embodiment, the anode material has a specific surface area of ≤10 m²/g.

In an embodiment, the anode material has a porosity of ≤10%, and a pressure-resistant hardness of ≥50 MPa.

In an embodiment, density of the anode material satisfies the following relationship: (ρ1-ρ2)/ρ2≤5%, where ρ1 is test density of the anode material, ρ2 is average density of the aggregate, and ρ2 is a sum of mass percentage of each component in the anode material * theoretical density of each component.

In a second aspect, the present application provides a preparation method of anode material, including the following:
adding a conductive enhancer having a tensile strength of ≥500 MPa to a first solvent and dispersing to obtain a dispersion;
mixing an active material, the dispersion, a first carbon source, and a second solvent to prepare a precursor; and
undergoing the precursor a primary heat treatment at 600°C to 1200°C to obtain an aggregate.

In the preparation method provided by the present application, by dispersing a conductive enhancer in a first solvent to obtain a dispersion, and then mixing the dispersion solution with an active material, a first carbon source, and a second solvent at different ratios to obtain precursor, the conductive enhancer inside the precursor disperses uniformly. The uniform dispersion of the conductive enhancer can effectively improve transport of charge carrier inside the aggregate, enhancing conductivity of the aggregate; a conductive material having a tensile strength of ≥500 MPa is selected as the conductive enhancer, such that the conductive enhancer can play a role of a support for the structure to enhance the stability of the material, thus strengthening structure strength of the aggregate, avoding stress change caused by expansion effect of the active material, maintaining structure stability of the aggregate, and facilitating to inhibit expansion rate of the anode material. Moreover, the preparation process is simple and controllable.

In an embodiment, the active material includes at least one of Li, Na, K, Sn, Ge, Si, SiO, Fe, Mg, Ti, Zn, Al, P, and Cu.

In an embodiment, the first carbon source includes at least one of sucrose, glucose, polyethylene, polyvinyl alcohol, polyethylene glycol, polyaniline, epoxy resin, phenolic resin, furfural resin, acrylic resin, polyethylene oxide, polyvinylidene fluoride, polyacrylonitrile, polyvinyl chloride, and asphalt.

In an embodiment, the conductive enhancer includes at least one of an alloy material, carbon nanotube, carbon fiber, and graphite fiber.

In an embodiment, the conductive enhancer is in a form of sheet and/or strip shape, and the conductive enhancer has an aspect ratio of 2 to 3000.

In an embodiment, the conductive enhancer has a tensile strength of ≥500 MPa.

In an embodiment, the conductive enhancer has a conductivity of >10² S/m.

In an embodiment, a mass ratio of the active material, the conductive enhancer, and the first carbon source is (15-120): (1-20): (10-50).

In an embodiment, the first solvent includes at least one of an organic solvent, an inorganic solvent, and a mixed solvent formed by mixing organic solvent and inorganic solvent.

In an embodiment, the second solvent includes an organic solvent.

In an embodiment, the organic solvent includes at least one of methanol, ethanol, ethylene glycol, propanol, isopropanol, glycerol, n-butanol, isobutanol, and pentanol.

In an embodiment, the inorganic solvent includes at least one of water, liquid carbon dioxide, liquid ammonia, liquid sulfur dioxide, thionyl chloride, sulfonyl chloride, lead acetate, hydrogen cyanide, hydrazine hydrate, sulfuryl chloride fluoride, cuprammonium solution, sulfuric acid, nitric acid, hydrogen fluoride, polyphosphoric acid, and super acid.

In an embodiment, an additive is further added in the process of mixing an active material, the dispersion, a first carbon source, and a second solvent to prepare a precursor.

In an embodiment, the additive includes at least one of a surfactant, and a coupling agent.

In an embodiment, the surfactant includes at least one of n-octadecanoic acid, lauric acid, polyacrylic acid, sodium dodecyl benzene sulfonate, n-eicosanoic acid, palmitic acid, tetradecanoic acid, undecanoic acid, cetyl trimethyl ammonium bromide, and polyvinyl pyrrolidone.

In an embodiment, the coupling agent includes a silane coupling agent, where the silane coupling agent including γ-aminopropyl triethoxy silane, γ-glycidoxypropyl trimethoxy silane, and γ-methacryloxypropyl trimethoxy silane.

In an embodiment, a mass ratio of the conductive enhancer and the additive is (1-20): (1-10).

In an embodiment, a metal oxide is further added in the process of mixing an active material, the dispersion, a first carbon source, and a second solvent.

In an embodiment, the metal oxide has a chemical formula of MₓO_{y}, 0.2≤y/x≤3, where M includes at least one of Sn, Ge, Si, Fe, Cu, Ti, Na, Mg, AI, Ca, and Zn.

In an embodiment, the metal oxide is in a form of sheet and/or strip shape, and the metal oxide has an aspect ratio greater than 2.

In an embodiment, a mass ratio of the metal oxide and the active material is (1-20):100.

In an embodiment, preparing the precursor further includes performing at least one of dispersion treatment and drying treatment after mixing the active material, the dispersion, the first carbon source, and the second solvent.

In an embodiment, the dispersion treatment includes at least one of mechanical stirring, ultrasonic dispersion, and grinding dispersion.

In an embodiment, a temperature of the drying treatment is 30°C to 400°C, and a time of the drying treatment is 1 h to 15 h.

In an embodiment, before undergoing the precursor a heat treatment, the preparation method further includes undergoing the precursor a densification treatment, such that the aggregate has a porosity of ≤10% and a pressure-resistant hardness of ≥50 MPa.

In an embodiment, the densification treatment includes at least one of a fusion process, a blending process, a moulding process, an isostatic pressing process, and an impregnation process.

In an embodiment, the fusion process is mechanical fusion.

In an embodiment, a rotating speed of fusion machine used for the mechanical fusion is 300 r/min to 3000 r/min.

In an embodiment, a blade gap width of fusion machine used for the mechanical fusion is from 0.01 cm to 0.9 cm.

In an embodiment, a time of the mechanical fusion is at least 0.5 h.

In an embodiment, a time of the primary heat treatment is 1 h to 10 h.

In an embodiment, a protective gas is introduced during the primary heat treatment, and the protective gas includes at least one of nitrogen, helium, neon, argon, and krypton.

In an embodiment, the preparation method further includes undergoing the aggregate a carbon coating process.

In an embodiment, the carbon coating process includes mixing the precursor with a second carbon source for secondary heat treatment.

In an embodiment, a mass ratio of the precursor and the second carbon source is (20-100):(10-80).

In an embodiment, the carbon coating process includes: mixing the aggregate with a second carbon source for secondary heat treatment;

In an embodiment, the second carbon source includes at least one of sucrose, glucose, polyethylene, polyvinyl alcohol, polyethylene glycol, polyaniline, epoxy resin, phenolic resin, furfural resin, acrylic resin, polyethylene oxide, polyvinylidene fluoride, polyacrylonitrile, polyvinyl chloride, and asphalt;

In an embodiment, a mass ratio of the aggregate and the second carbon source is (15-100):(10-70);

In an embodiment, a temperature of the secondary heat treatment is 600°C to 1200°C, and a time of the secondary heat treatment is 1 h to 10 h;

In an embodiment, a protective gas is introduced during the secondary heat treatment;

In an embodiment, the protective gas includes at least one of nitrogen, helium, neon, argon, and krypton.

In a third aspect, the present application provides a lithium ion battery, including the anode material according to the first aspect, or the anode material prepared by the preparation method according to the second aspect.

The technical solutions of the present application have at least the following beneficial effects:
The anode material provided by the present application includes an aggregate, the aggregate includes an active material, a carbon material, and a conductive enhancer, where the conductive enhancer has a tensile strength of ≥500 MPa, and a dispersibility N in the anode material of ≥1. An uniform dispersion of the conductive enhancer effectively improve transport of charge carrier inside the aggregate, enhancing conductivity of the aggregate; a conductive material having a tensile strength of ≥500 MPa is selected as the conductive enhancer, such that the conductive enhancer has a excellent mechanical property, while controlling the dispersibility N of the conductive enhancer to ≥1 makes the conductive enhancer being uniformly distributed in the anode material. The conductive enhancer can play a role of a support for the structure to enhance the stability of the material. The conductive enhancer can be filled with the active material between them, for reducing stress change caused by expansion of the active material and strengthening structure strength of the aggregate. It is verified that the above anode material have a low expansion rate and a good cycling stability.

In the preparation method provided by the present application, by dispersing a conductive enhancer in a first solvent to obtain a dispersion, and then mixing the dispersion solution with an active material, a first carbon source, and a second solvent at different ratios to obtain precursor, the conductive enhancer inside the precursor has a dispersibility N of ≥1. An uniform dispersion of the conductive enhancer can effectively improve transport of charge carrier inside the aggregate, enhancing conductivity of the aggregate; a conductive material having a tensile strength of ≥500 MPa is selected as the conductive enhancer, such that the conductive enhancer can play a role of a support for the structure to enhance the stability of the material, thus strengthening structure strength of the aggregate, avoding stress change caused by expansion effect of the active material, maintaining structure stability of the aggregate, and facilitating to inhibit expansion rate of the anode material. Moreover, the preparation process is simple and controllable.

### BRIEF DESCRIPTION OF DRAWINGS

FIG. 1 is a flow chart of a preparation method for anode material according to an example of the present application;
FIG. 2 is a scanning electron microscope (SEM) photo of anode material prepared by Example 1 of the present application;
FIG. 3 is an XRD pattern of anode material prepared by Example 1 of the present application;
FIG. 4 is a graph of initial charge/discharge curve of anode material material prepared by Example 1 of the present application;
FIG. 5 is a graph of cycling performance curve of anode material material prepared by Example 1 of the present application.

### DESCRIPTION OF EMBODIMENT

There are preferred examples of the embodiments of the present application hereafter. It should be noted that, for ordinary person skilled in the art, without departing from the principles the embodiments of the present application, several improvements and modifications can be made which are also considered to fall in the scope of protection of the embodiments of the present application.

An anode material of an embodiment, including an aggregate, the aggregate includes an active material, a carbon material, and a conductive enhancer; where the conductive enhancer has a tensile strength of ≥500 MPa, and a dispersibility N in the anode material of ≥1;
where the dispersibility N is obtained by the following test method:
dividing a SEM section of an anode material particle into regions with area of A×B, where A and B are both :51 micron, counting the distribution of the conductive enhancer within all of the regions of single the anode material particle, seting number of regions having the conductive enhancer with a spacing to each other of <10 nm as Na, seting number of regions having the conductive enhancer with a spacing to each other all of ≥10 nm as Nb, and defining dispersibility C of the conductive enhancer in single the anode material particle as C = Nb/Na, where N is the arithmetic average of C values of any 5 of the anode material particles.

Regardless of the shape of the conductive enhancer, the spacing between the conductive enhancer described herein refers to the shortest distance between the conductive enhancers.

The uniform dispersion of the conductive enhancer can effectively improve transport of charge carrier inside the aggregate, enhancing conductivity of the aggregate. Moreover, the conductive enhancer can effectively improve the structure stability of the aggregate, thus strengthening structure strength of the aggregate, avoding stress change caused by expansion effect of the active material, maintaining structure stability of the aggregate, thereby improving cycle stability performance of the material, and decreasing the expansion rate. The tensile strength of the conductive enhancer is controlled to ≥500 MPa, such that the conductive enhancer has a excellent mechanical property, and can play a role of a support for the structure to enhance the stability of the material. By controlling the minimum spacing between the conductive enhancers, the conductive enhancer can be filled with the active material between them, and the conductive enhancer can play a role of a support for the structure to enhance the stability of the material, thereby buffering volume expansion variation of the active material, and improving cycling performance.

The tensile strength of the conductive enhancer can be 500 MPa, 800 MPa, 1 GPa, 5 GPa, 10 GPa, 25 GPa, 30 GPa, 45 GPa, or 50 GPa, and so on, or other values within the above ranges, which are not limited herein.

The conductive enhancer is distributed inside and/or on surface of the aggregate.

In some embodiments, the conductive enhancer is distributed in the active material, and the carbon material is filled between the active material and the conductive enhancer. It is understood that, by distributing the conductive enhancer in the active material, the conductivity of the active material can be improved, and improv transport of charge carrier inside the active material.

In some embodiments, there are pores between the carbon material and the conductive enhancer, and the pores are filled with the active material. It is understood that, the carbon material and the conductive enhancer form a pore structure, in which the active material can be filled, thus the structure strength of the aggregate can be improved, and the stress change caused by the expansion of active material can be resisted though the pore structure, for maintaining the structure stability of the aggregate.

In some embodiments, the active material refers to a substance that can react with lithium to de-intercalate lithium. The active material includes at least one of an elemental metal, a metal oxide, and a metal alloy. Further, the metal includes at least one of Li, Na, K, Sn, Ge, Si, Fe, Mg, Ti, Zn, Al, P, and Cu.

In some embodiments, the active material includes at least one of Li, Na, K, Sn, Ge, Si, SiO, Fe, Mg, Ti, Zn, Al, P, and Cu.

In some embodiments, the active material can be the above elemental metal. Further, the active material can be specifically Si, Sn, Ge, and Al. In further embodiments, the active material also can be an alloy formed of at least two of the foregoing metals, such as a silicon lithium alloy, a silicon magnesium alloy, and so on. In further embodiments, the active material also can be an oxide of the foregoing metals, such as silicon monoxide. Definitely, it is noted that, in some instances, the active material includes at least two of the elemental metal, the metal alloy, and the metal oxide.

In some embodiments, the active material is a particulate, and the active material has a median particle diameter of 1 nm to 500 nm. Specifically, it can be 1 nm, 5 nm, 10 nm, 15 nm, 20 nm, 30 nm, 40 nm, 50 nm, 100 nm, 200 nm, 300 nm, 400 nm, or 500 nm, and so on, or other values within the above ranges, which are not limited herein. According to a number of experiments, it is found that a nanoscale active material, which have a high surface energy, easily agglomerates during charging and discharging. A strength structure of the particle can suppress the volume expansion of the active particle. However, due to the larger surface energy of the nanoscale active particle, an agglomeration can occur easily during charging and discharging. The too small particle size of the active material result a high production cost. Preferably, the active material has a median particle diameter of 1 nm to 200 nm, more preferably, 1 nm to 100 nm.

In some embodiments, the carbon material includes at least one of amorphous carbon, crystalline carbon, hard carbon, soft carbon, and mesocarbon microbead.

In some embodiments, the conductive enhancer includes at least one of an alloy material and a conductive carbon. Definitily, it is understood that, any other conductive material having a tensile strength of ≥500 MPa can be used as the conductive enhancer.

In some embodiments, the conductive carbon includes at least one of carbon nanotube, carbon fiber, and graphite fiber.

In some embodiments, the alloy material is an alloy having a conductivity of >10² S/m and a tensile strength of £500 MPa.

In some embodiments, the alloy material includes at least one of a silicon alloy, an aluminum alloy, a copper alloy, an aluminum alloy, and a lithium alloy. Further, the silicon alloy includes at least one of a nickel silicon alloy, an iron silicon alloy, a copper silicon alloy, a silicon manganese alloy, and aluminum silicon alloy.

In some embodiments, the conductive enhancer has a conductivity of >10² S/m. Specifically, the conductivity of the conductive enhancer can be 100 S/m, 10³ S/m, 10⁴ S/m, 10⁵ S/m, 10⁸ S/m, and so on. The conductive enhancer within this range effectively improve the transport of charge carrier inside the aggregate, enhancing the conductivity of the aggregates.

In some embodiments, the conductive enhancer is in a form of sheet and/or strip shape.

In some embodiments, the conductive enhancer has an aspect ratio of 2 to 3000. It is noted that when the conductive enhancer is in a form of strip shape, the aspect ratio specifically refers to the ratio of length to particle size of the particle, where the particle size refers to the maximum straight-line distance between two points on the periphery of the cross-section perpendicular to the length of the conductive enhancer in the form of strip shape; when the conductive enhancer is in a form of sheet, the aspect ratio specifically refers to the ratio of length to width of the sheet conductive enhancer. Specifically, the conductive enhancer may have an aspect ratio of 2, 30, 46, 150, 360, 670, 800, 900, 1500, 2000, or 3000, and so on, or other values within the above ranges, which are not limited herein. According to a number of experiments, it is found that the conductive enhancer having the aspect ratio in this range has a superior mechanical property, which play a role of a support for the structure to enhance the stability of the material, thereby buffering volume expansion variation of the active material, and improving cycling performance.

In some embodiments, the mass ratio of the active material, the carbon material and the conductive enhancer is (20-70):(10-70):(3-20). Specifically, it can be 20:10:3, 50:70:10, 30:70:15, 25:50:12, 20:60:10, 25:70:8, 70:10:10, 70:50:20, 70:25:15, 50:50:10, and so on, or other values within the above ranges, which are not limited herein.

In some embodiments, the aggregate further includes a metal oxide. Compounding the metal oxide with the active material can reduce expansion of the active material, and improve long cycle performance, and the aggregate has a higher pressure-resistant hardness.

In some embodiments, in the aggregate, the metal oxide and the conductive enhancer are distributed in the active material, and the carbon material is filled between the active material and the metal oxide, and between the active material and the conductive enhancer.

Specifically, there are pores between the active material and the metal oxide, and between the active material and the conductive enhancer, and the pores are filled with the carbon material. It is understood that, though the pore structure formed by the active material and the metal oxide, the carbon material fills in the pores, which can improve the structure stability of the aggregates, and resist certain volume expansion stress for reducing expansion.

In some embodiments, the metal oxide has a chemical formula of MₓO_{y}, 0.2≥y/x≥3, where M includes at least one of Sn, Ge, Si, Fe, Cu, Ti, Na, Mg, Al, Ca, or Zn. Specifically, the metal oxide can be SiO, GeO₂, SnO₂, ZnO, TiO₂, Fe₃O₄, MgO, SiO₂, CuO, and so on. The change rate of volume expansion of the selected metal oxide is lower than that of the active material during intercalating lithium. Thus, compounding the metal oxide with the active material can reduce expansion of the active material, and improve long cycle performance.

In some embodiments, the metal oxide is in a form of sheet and/or strip shape.

In some embodiments, the metal oxide has an aspect ratio greater than 2. It is noted that when the metal oxide is in a form of strip shape, the aspect ratio specifically refers to the ratio of length to particle size of the particle, where the particle size refers to the maximum straight-line distance between two points on the periphery of the cross-section perpendicular to the length of the metal oxide in the form of strip shape; when the metal oxide is in a form of sheet, the aspect ratio specifically refers to the ratio of length to width of the sheet metal oxide. Specifically, the metal oxide may have an aspect ratio of 2, 2.5, 3, 3.5, 4, 4.5, 5, 6, 7, 8, 9, 12, 15, 17, 18, 22, and so on, or other values within the above ranges, which are not limited herein. According to a number of experiments, it is found that when the aspect ratio of the metal oxide is greater than 2, physical bonding force of the metal oxide to the active material can be increased, thereby more buffering the volume expansion variation of the active material, improving cycle performance.

In some embodiments, a mass ratio of the metal oxide and the active material is (1-20):100. Specifically, the mass ratio of the metal oxide and the active material can be 1:100, 1.5:100, 2:100, 3:100, 4.5:100, 5:100, 6:100, 7:100, 8:100, 9:100, and so on, or other values within the above ranges, which are not limited herein. If the metal oxide content is too high, initial efficiency of the material decreases, and if the metal oxide content is too low, rigidity of it to the aggregate structure decreases, and cycling stability of the particle decreases.

In some embodiments, the anode material has a porosity of ≤10%, and a pressure-resistant hardness of ≥50 MPa.

At this point, the anode material has a low porosity, i.e, its solidity is high, on one hand, it facilitates to increase the energy density of the material, on the other hand, even if the surface of the material with high solidity is destroyed, the electrolyte does not readily penetrate into the interior of the aggregate, which facilitates protecting the active material particles inside, reducing the probability of contact of the electrolyte with the active material, thereby facilitating the formation of a stable solid electrolyte film. In addition, the high solidity anode material has a higher pressure-resistant hardness, which is able to offset the stress effects bringing by expansion, improve the structural stability of the anode material, can effectively suppress volume expansion of the anode material, decrease the expansion rate, and improve cell cycle performance.

In some embodiments, the anode material has a porosity of ≤10%. The porosity of the anode material specifically can be 10%, 9%, 9.5%, 8%, 8.5%, 7.5%, 7%, 6.5%, 6%, or 5%, and so on, or other values within the above ranges, which are not limited herein. It is understood that the anode material has a low porosity, i.e, its solidity is high, facilitating the formation of a stable solid electrolyte film, reducing the contact of the electrolyte with the active material. Preferably, the anode material has a porosity of ≤5%, and more preferably, the anode material has a porosity of ≤3%.

The anode material has a pressure-resistant hardness of ≥50 MPa. The pressure-resistant hardness of the anode material can be 50 MPa, 250 MPa, 300 MPa, 450 MPa, 500 MPa, 750 MPa, 900 MPa, 1150 MPa, 11200 MPa, or 1250 MPa, or other values within the above ranges, which are not limited herein. Because it has strong rigidity, and the structural stability of the particles is strong, which offset a certain volume expansion stress, thereby reducing expansion, improving battery cycling stability. Preferably, the anode material has a pressure-resistant hardness of ≥100 MPa, and more preferably, the anode material has a pressure-resistant hardness of ≥200 MPa.

In some embodiments, the density of the anode material satisfies the following relationship: the difference between the test density and the average density of the anode material is ≤5%. The closer the test density of the anode material particle to the average density, and the smaller the phase difference, the less the porosity inside the particles, and the more dense, which facilitate to form a stable solid electrolyte film, reducing the contact of the electrolyte with the active material.

Specifically, density of the anode material satisfies the following relationship: (ρ1-ρ2)/ρ2≤5%, where ρ1 is test density of the anode material, ρ2 is average density of the anode material.

Where ρ2 is a sum of mass percentage of each component in the anode material * theoretical density of each component.

In a specific example, when the anode material includes an aggregate, and the aggregate includes an active material, a conductive enhancer, and a carbon material, ρ2 = the mass percentage content of the active material in the anode material * the theoretical density of the active material + the mass percentage content of the conductive enhancer in the anode material * the theoretical density of the conductive enhancer + the mass percentage content of the carbon material in the anode material * the theoretical density of the carbon material.

When the anode material includes an aggregate, and the aggregate includes an active material, a metal oxide, a conductive enhancer, and a carbon material, ρ2 = the mass percentage content of the active material in the anode material * the theoretical density of the active material + the mass percentage content of the metal oxide in the anode material * the theoretical density of the metal oxide + the mass percentage content of the conductive enhancer in the anode material * the theoretical density of the conductive enhancer + the mass percentage content of the carbon material in the anode material * the theoretical density of the carbon material.

Further, the anode material further includes a carbon layer coated on at least a portion of surface of the aggregate. Preferably, the carbon layer is distributed over surface of the aggregate.

In some embodiments, a material of the carbon layer includes amorphous carbon.

In some embodiments, the carbon layer has a thickness of 10 nm to 1500 nm. It is understood that, the carbon layer coated on surface of the aggregate is capable of reducing the contact of the active material with the electrolyte, reducing the generation of a passivation film, and increasing the reversible capacity of the battery.

Specifically, the thickness of the carbon layer can be 10 nm, 50 nm, 180 nm, 200 nm, 350 nm, 400 nm, 550 nm, 700 nm, 850 nm, 900 nm, 1050 nm, 1200 nm, or 1500 nm, and so on, or other values within the above ranges, which are not limited herein. When the carbon layer is too thick, proportion of the carbon is too high, it does not facilitate to obtain a high specific capacity composite; when the carbon layer is too thin, it does not facilitate to increase the conductivity of the anode material, and the volume expansion inhibition performance of the material is weak, resulting in a poor long cycle performance. Preferably, the carbon layer has a thickness of 50 nm to 800 nm; more preferably, the carbon layer has a thickness of 100 nm to 500 nm.

It is noted that, in some embodiments, the anode material in which the carbon layer is coated on surface of the aggregate has a porosity of ≤10%, and a pressure-resistant hardness of z50 MPa. Keeping the overall porosity and the pressure-resistant hardness of the anode material within these ranges can further enhance the performance of the anode material.

In some embodiments, the anode material has a median particle diameter of 0.5 µm to 30 µm. Specifically, it can be 0.5 µm, 1 µm, 5 µm, 8 µm, 10 µm, 13 µm, 15 µm, 18 µm, 20 µm, 25 µm, or 30 µm, and so on, or other values within the above ranges, which are not limited herein. It is understood that controlling the median particle diameter of the anode material within the above ranges facilitate to improve cycling performance of the anode material.

In some embodiments, the anode material has a specific surface area of ≤10 m²/g. Specifically, it can be 10 m²/g, 8 m²/g, 7 m²/g, 5 m²/g, 3 m²/g, 2 m²/g, 1 m²/g, or 0.5 m²/g, and so on, or other values within the above ranges, which are not limited herein. It is understood that controlling the specific surface area of the anode material within the above ranges facilitate to inhibit the volume expansion, and to improve cycling performance of the anode material.

It is noted that the anode material of the various embodiments described above may be combined optionally without contradiction, such as a combined limitation of the pressure-resistant hardness, porosity and density of the aggregate.

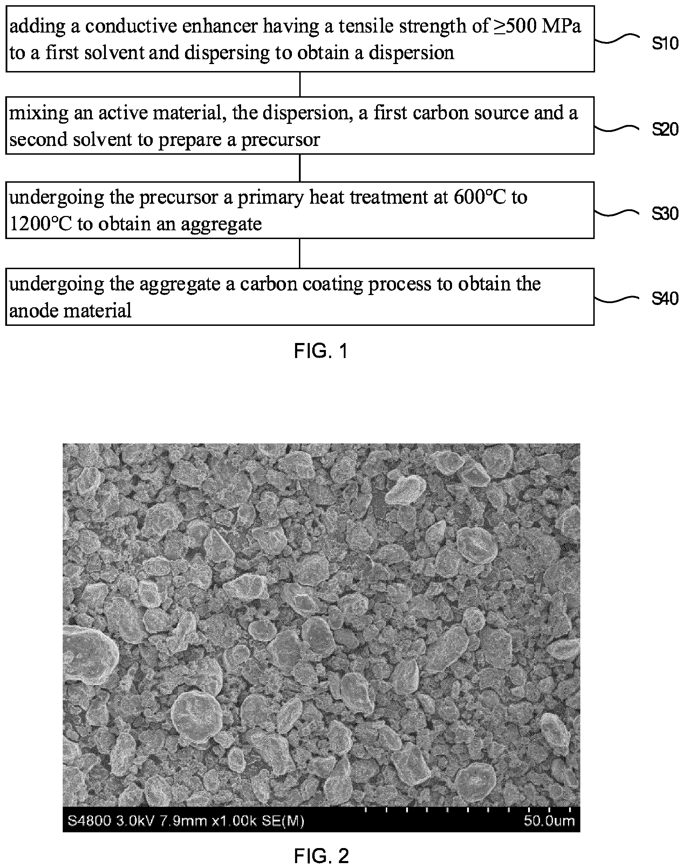

As shown in FIG. 1, a preparation method of anode material according to another embodiment, includes the following:
Step S10, adding a conductive enhancer having a tensile strength of ≥500 MPa to a first solvent and dispersing to obtain a dispersion;
Step S20, mixing an active material, the dispersion, a first carbon source and a second solvent to prepare a precursor;
Step S30, undergoing the precursor a primary heat treatment at 600°C to 1200°C to obtain an aggregate; and
Step S40, undergoing the aggregate a carbon coating process to obtain the anode material.

The anode material prepared by the preparation method of this embodiment include an aggregate and a carbon layer coated on the surface of the aggregate, and the aggregate includes an active material, a carbon material, and a conductive enhancer; the conductive enhancer has a tensile strength of ≥500 MPa, and a dispersibility in the particle of ≥1.

In the preparation method of this embodiment, by dispersing a conductive enhancer in a first solvent to obtain a dispersion, and then mixing the dispersion solution with an active material, a first carbon source, and a second solvent at different ratios to obtain precursor, the conductive enhancer inside the precursor disperses uniformly. The uniform dispersion of the conductive enhancer can effectively improve transport of charge carrier inside the aggregate, enhancing conductivity of the aggregate; a conductive material having a tensile strength of ≥500 MPa is selected as the conductive enhancer, such that the conductive enhancer can play a role of a support for the structure to enhance the stability of the material, thus strengthening structure strength of the aggregate, avoding stress change caused by expansion effect of the active material, maintaining structure stability of the aggregate, and facilitating to inhibit expansion rate of the anode material. Moreover, the preparation process is simple and controllable.

The preparation method of the present application are described in detail below in connection with the embodiments:
In step S10, adding a conductive enhancer having a tensile strength of ≥500 MPa to a first solvent and dispersing to obtain a dispersion.

The conductive enhancer has a tensile strength of ≥500 MPa. It is noted that when the tensile strength of the conductive enhancer is too low, it is difficult for the conductive enhancer to resist the stress change caused by the expansion of the active material, and to maintain the structure stability of the aggregate, which does not facilitate to improve the cycling performance of the material. Specifically, the tensile strength of the conductive enhancer can be 500 MPa, 800 MPa, 1 GPa, 6 GPa, 10 GPa, 15 GPa, 30 GPa, 35 GPa, or 80 GPa, and so on, or other values within the above ranges, which are not limited herein. According to a number of experiments, it is found that the tensile strength of the conductive enhancer is controlled to the above range, such that the conductive enhancer has a excellent mechanical property, and can play a role of a support for the structure to enhance the stability of the material, thereby buffering volume expansion variation of the active material, and improving cycling performance.

In some embodiments, the first solvent includes an inorganic solvent, or an organic solvent, or a mixed solvent formed by mixing organic solvent and inorganic solvent. The organic solvent includes at least one of methanol, ethanol, ethylene glycol, propanol, isopropanol, glycerol, n-butanol, isobutanol, and pentanol; the inorganic solvent includes at least one of water, liquid carbon dioxide, liquid ammonia, liquid sulfur dioxide, thionyl chloride (thionyl chloride), sulfonyl chloride (sulfuryl chloride), lead acetate (lead sugar), hydrogen cyanide, hydrazine hydrate, sulfuryl chloride fluoride, cuprammonium solution, sulfuric acid, nitric acid, hydrogen fluoride, polyphosphoric acid, super acid, and so on, where the super acid includes at least one of HSO₃Cl, HSO₃F, HSO₃CF₃, HSO₃F-SbF₅, SbF₅, AsF₅, AuF₅, TaF₅, and NbF₅.

In some embodiments, the dispersion treatment includes at least one of mechanical stirring, ultrasonic dispersion, and grinding dispersion. Preferably, the grinding dispersion is applied, the mixing of components can be more uniform by sufficient grinding. The conductive enhancer is firstly added to the first solvent for dispersing, such that the conductive enhancer can be as uniformly dispersed as possible in the first solvent to avoid agglomeration of the conductive enhancer. In some embodiments, a time for the dispersion can be controlled to 0.5 h to 10 h.

In step S20, adding a conductive enhancer having a tensile strength of ≥500 MPa to a first solvent and dispersing to obtain a dispersion.

In some embodiments, the active material refers to a substance that can react with lithium to de-intercalate lithium. The active material includes at least one of an elemental metal, a metal oxide, and a metal alloy. Further, the metal includes at least one of Li, Na, K, Sn, Ge, Si, Fe, Mg, Ti, Zn, Al, P, and Cu.

In some embodiments, the active material includes at least one of Li, Na, K, Sn, Ge, Si, SiO, Fe, Mg, Ti, Zn, Al, P, and Cu.

In some embodiments, the active material can be the above elemental metal. Further, the active material specifically can be Si, Sn, Ge, and Al. In further embodiments, the active material also can be an alloy formed of at least two of the foregoing metals, such as a silicon lithium alloy, a silicon magnesium alloy, and so on. In further embodiments, the active material also can be an oxide of the foregoing metals, such as silicon monoxide. Definitely, it is noted that, in some instances, the active material includes at least two of the elemental metal, the metal alloy, and the metal oxide.

In some embodiments, the active material is a particulate, and the active material has a median particle diameter of 1 nm to 500 nm. Specifically, it can be 1 nm, 5 nm, 10 nm, 15 nm, 20 nm, 30 nm, 40 nm, 50 nm, 100 nm, 200 nm, 300 nm, 400 nm, or 500 nm, and so on, or other values within the above ranges, which are not limited herein. According to a number of experiments, it is found that a nanoscale active material, which have a high surface energy, easily agglomerates during charging and discharging. A strength structure of the particle can suppress the volume expansion of the active particle. However, due to the larger surface energy of the nanoscale active particle, an agglomeration can occur easily during charging and discharging. The too small particle size of the active material result a high production cost. Preferably, the active material has a median particle diameter of 1 nm to 200 nm, more preferably, 1 nm to 100 nm.

In some embodiments, the first carbon source includes at least one of sucrose, glucose, polyethylene, polyvinyl alcohol, polyethylene glycol, polyaniline, epoxy resin, phenolic resin, furfural resin, acrylic resin, polyethylene oxide, polyvinylidene fluoride, polyacrylonitrile, polyvinyl chloride, and asphalt.

In some embodiments, the second solvent includes an organic solvent. The organic solvent includes at least one of methanol, ethanol, ethylene glycol, propanol, isopropanol, glycerol, n-butanol, isobutanol, and pentanol.

In some embodiments, the conductive enhancer includes at least one of an alloy material and a conductive carbon.

In some embodiments, the conductive carbon includes at least one of carbon nanotube, carbon fiber, and graphite fiber.

In some embodiments, the conductive enhancer has a conductivity of >10² S/m. Specifically, the conductivity of the conductive enhancer can be 100 S/m, 10³ S/m, 10⁴ S/m, 10⁵ S/m, 10⁸ S/m, and so on.

In some embodiments, the conductive enhancer is in a form of sheet and/or strip shape.

In some embodiments, the conductive enhancer has an aspect ratio of 2 to 3000. It is noted that when the conductive enhancer is in a form of strip shape, the aspect ratio specifically refers to the ratio of length to particle size of the particle; when the conductive enhancer is in a form of sheet, the aspect ratio specifically refers to the ratio of length to width of the sheet conductive enhancer. Specifically, the conductive enhancer may have an aspect ratio of 2, 30, 46, 150, 360, 670, 800, 900, 1500, 2000, or 3000, and so on, or other values within the above ranges, which are not limited herein. According to a number of experiments, it is found that the conductive enhancer having the aspect ratio in this range has a superior mechanical property, which play a role of a support for the structure to enhance the stability of the material, thereby buffering volume expansion variation of the active material, and improving cycling performance.

In some embodiments, a mass ratio of the active material, the conductive enhancer, and the first carbon source is (15-120): (1-20): (10-50). Specifically, it can be 20:10:20, 50:10:10, 100:20:15, 100:20:10, 80:10:10, 80:1:10, 80:5:50, 50:20:20, 120:20:50, 120:20:10, and so on, or other values within the above ranges, which are not limited herein.

In some embodiments, an additive is also added in the process of mixing an active material, the dispersion, a first carbon source and a second solvent to prepare a precursor. The additive additive can be effective to improve the stability of the connection of the active material to to the first carbon source, thereby forming a strong system, and reducing the expansion rate of the pole piece.

In some embodiments, a mass ratio of the active material and the additive is (15-120):(1-10). Specifically, the mass ratio of the active material and the additive can be 15:1, 15:5, 15:10, 50:1, 55:2, 65:10, 70:2, 80:5, 90:8, 100:1, 100:10, 120:5, and so on, which are not limited herein.

In some embodiments, the additive includes at least one of a surfactant and a coupling agent.

The surfactant includes at least one of n-octadecanoic acid, lauric acid, polyacrylic acid, sodium dodecyl benzene sulfonate, n-eicosanoic acid, palmitic acid, tetradecanoic acid, undecanoic acid, cetyl trimethyl ammonium bromide, and polyvinyl pyrrolidone.

The coupling agent includes a silane coupling agent. The silane coupling agent includes γ-aminopropyl triethoxy silane, γ-glycidoxypropyl trimethoxy silane, and γ-methacryloxypropyl trimethoxy silane.

In some embodiments, a metal oxide is also added in the process of mixing an active material, the dispersion, a first carbon source and a second solvent to prepare a precursor.

In some embodiments, the metal oxide has a chemical formula of MₓO_{y}, 0.2≤y/x≤3, where M includes at least one of Sn, Ge, Si, Fe, Cu, Ti, Na, Mg, AI, Ca, and Zn.

In some embodiments, the metal oxide is in a form of sheet and/or strip shape.

In some embodiments, the metal oxide has an aspect ratio greater than 2.

In some embodiments, a mass ratio of the metal oxide and the active material is (1-20):100. Specifically, the mass ratio of the metal oxide and the active material can be 1:100, 1.5:100, 2:100, 3:100, 4.5:100, 5:100, 6:100, 7:100, 8:100, 9:100, and so on, or other values within the above ranges, which are not limited herein. If the metal oxide content is too high, initial efficiency of the material decreases, and if the metal oxide content is too low, rigidity of it to the aggregate structure decreases, and cycling stability of the particle decreases.

In some embodiments, the process of preparing the precursor further includes performing dispersion treatment after mixing the active material, the conductive enhancer, the first carbon source, and the solvent.

In some embodiments, the dispersion treatment includes at least one mechanical stirring, ultrasonic dispersion, and grinding dispersion. Preferably, the grinding dispersion is applied, such that the active material can be dispersed, avoiding agglomeration of the active material together, and allowing the active material to disperse into smaller nanoparticles. Preferably, a wet ball milling is applied, dispersion time of the wet ball milling can be controlled to 0.5 h to 10 h. The mixing of components can be more uniform by sufficient grinding, so that particle size of the active material reaches to 1 nm to 500 nm.

In some embodiments, the preparation method further includes a drying treatment for precursor the before undergoing the precursor a heat treatment.

In some embodiments, a temperature of the drying treatment is 30°C to 400°C. Specifically, it can be 30°C, 40°C, 50°C, 80°C, 100°C, 120°C, 150°C, 180°C, 200°C, 250°C, 280°C, 300°C, or 400°C, and so on. A time of the drying treatment is 1 h to 15 h. Specifically, it can be 1 h, 3 h, 5 h, 7 h, 9 h, 10 h, 12 h, or 15 h, and so on. The manner of the drying treatment may be, for example, oven drying, freeze drying, blending steaming, and spray drying, and so on. The drying treatment in the present embodiment may remove the solvent in precursor solution as much as possible.

In some embodiments, before undergoing the precursor a heat treatment, the preparation method further includes undergoing the precursor a densification treatment. By the densification treatment, the aggregate obtained has a porosity of ≤10% and a pressure-resistant hardness of ≥50 MPa.

In some embodiments, the densification treatment includes at least one of a fusion process, a blending process, a moulding process, an isostatic pressing process, and an impregnation process.

In some embodiments, the fusion process is mechanical fusion. Undergoing the precursor a fusion process increases the pressure-resistant hardness of the anode material, and further undergoing the precursor a primary heat treatment improves the stability of the particle structure as well as improves the stability of the connection between the active material and the first carbon source and reduces porosity. Of course, in other embodiments, other processes may also be employed for the densification treatment, such as moulding, isostatic pressing, impregnation, and so on, providing the aggregate has a porosity of ≤10% and a pressure-resistant hardness of ≥50 MPa.

In some embodiments, during fusing, the rotating speed of fusion machine is 300 r/min to 3000 r/min. Specifically, it can be 300 r/min, 1000 r/min, 1500 r/min, 2000 r/min, 2500 r/min, or 3000 r/min, and so on. The blade gap width of fusion machine is 0.01 cm to 0.9 cm. Specifically, it can be 0.01 cm, 0.05 cm, 0.1 cm, 0.15 cm, 0.2 cm, 0.25 cm, 0.3 cm, 0.5 cm, 0.9 cm, and so on. The time of the fusion is at least 0.5 h. Specifically, it can be 0.5 h, 0.8 h, 0.9 h, 1.0 h, 1.5 h, or 2 h, and so on. Which are not defined herein.

In step S30, undergoing the precursor a primary heat treatment at 600°C to 1200°C to obtain an aggregate.

In some embodiments, the primary heat treatment can be, for example, vacuum sintering, hot-pressed sintering, or atmospheric sintering.

In some embodiments, a temperature of the primary heat treatment can be 600°C, 700°C, 800°C, 900°C, 1000°C, 1100°C, 1200°C, and so on. Preferably, the temperature of the primary heat treatment is 600°C to 1000°C.

In some embodiments, a time of the primary heat treatment is 1 h to 10 h, for example, it can be 1 h, 2 h, 3 h, 4 h, 5 h, 6 h, 7 h, 8 h, 9 h, or 10 h, and so on.

A heating rate of the heat treatment is 1°C/min to 30°C/min. Specifically, it can be 1°C/min, 5°C/min, 10°C/min, 15°C/min, 20°C/min, 25°C/min or 30°C/min, and so on. For example, preferably, the heating rate of the heat treatment can be 1°C/min to 15°C/min.

A protective gas is introduced during the heat treatment, and the protective gas includes at least one of nitrogen, helium, neon, argon, and krypton.

Step S40, undergoing the aggregate a carbon coating process to obtain the anode material.

It is noted that the anode material of the present embodiment may not be carbon coated, in this case the step S30 can be omitted.

In some embodiments, the carbon coating process includes mixing the precursor with a second carbon source for secondary heat treatment.

In some embodiments, the second carbon source includes at least one of sucrose, glucose, polyethylene, polyvinyl alcohol, polyethylene glycol, polyaniline, epoxy resin, phenolic resin, furfural resin, acrylic resin, polyethylene oxide, polyvinylidene fluoride, polyacrylonitrile, polyvinyl chloride, and asphalt.

In some embodiments, the precursor has a particle size of 0.5 µm to 20 µm, specifically it can be 0.5 µm, 1 µm, 5 µm, 8 µm, 10 µm, 13 µm, 15 µm, 18 µm, or 20 µm, and so on, or other values within the above ranges, which are not limited herein. It is understood that controlling the average particle size of the anode material within the above range facilitates to improve cycling performance of the anode material.

In some embodiments, a mass ratio of the precursor and the second carbon source is (20-100):(10-80). Specifically, the mass ratio of the precursor and the second carbon source is 100:25, 100:35, 100:45, 100:55, 100:65, and so on, or other values within the above ranges, which are not limited herein.

In some embodiments, a temperature of the secondary heat treatment is 600°C to 1200°C.

In some embodiments, a time of the secondary heat treatment is 1 h to 10 h.

In some embodiments, a heating rate of the secondary heat treatment is 1°C/min to 30°C/min.

In some embodiments, a protective gas is introduced during the secondary heat treatment, and the protective gas includes at least one of nitrogen, helium, neon, argon, and krypton.

In some embodiments, a manner of the mixing can include magnetic stirring, mechanical stirring, ultrasonic dispersion, grinding dispersion, and so on.

In some embodiments, other ways may also be employed for undergoing the aggregate a carbon coating process. Specifically, the carbon coating process includes mixing the precursor with a second carbon source for secondary heat treatment, to form a carbon layer on surface of the aggregate.

In some embodiments, a mass ratio of the aggregate and the second carbon source is (15-100):(10-70). Specifically, the mass ratio of the precursor and the second carbon source is 100:25, 100:35, 100:45, 100:55, 100:65, and so on, or other values within the above ranges, which are not limited herein.

In some embodiments, a temperature of the secondary heat treatment is 600°C to 1200°C, for example, it can be 600°C, 700°C, 800°C, 900°C, 1000°C, 1100°C, 1200°C, and so on. Preferably, the temperature of the secondary heat treatment is 600°C to 1000°C

In some embodiments, a time of the secondary heat treatment is 1 h to 10 h, for example, it can be 1 h, 2 h, 3 h, 4 h, 5 h, 6 h, 7 h, 8 h, 9 h, or 10 h, and so on.

In some embodiments, a heating rate of the secondary heat treatment is 1°C/min to 30°C/min. Specifically, it can be 1°C/min, 5°C/min, 10°C/min, 15°C/min, 20°C/min, 25°C/min or 30°C/min, and so on. For example, preferably, the heating rate of the heat treatment can be 1°C/min to 15°C/min

In some embodiments, a protective gas is introduced during the secondary heat treatment, and the protective gas includes at least one of nitrogen, helium, neon, argon, and krypton.

It is noted that the anode material of the present embodiment is not limited to undergoing the above two carbon coated methods.

In some embodiments, after the secondary heat treatment, at least one of crushing, sieving and demagnetizing is further performed. Preferably, after the secondary heat treatment, crushing, sieving and demagnetizing are performed in sequence.

In some embodiments, the manner of the crushing is by means of any one of a mechanical shredder, a gas flow shredder, and a low temperature shredder.

In some embodiments, the manner of the sieving is by means of any one of a fixed sieve, a drum screen, a resonance screen, a roller screen, a vibratory screen, and a chain sieve, where a number of the sieving is ≥500 mesh. Specifically, a mesh number of the sieving may be 500 mesh, 600 mesh, 700 mesh, 800 mesh, and so on. Controlling the particle size of the anode material within the above ranges facilitates increasing cycling performance of the anode material.

In some embodiments, a device for the demagnetizing is any one of a permanent magnet drum separator, an electromagnetic deferromagnetic machine, and a pulsating high gradient magnetic separator. The demagnetizing is to control the magnetic material content of resulting anode material, to avoid affecting of the magnetic material on the discharging effect of the lithium ion and the safety of the battery in using.

The present application also provides a lithium ion battery including an anode material as described above

The median particle diameter in the present application refers to the average particle size, the physical meaning of which is the particle size when the cumulative particle size distribution percentage of the particles reaches 50%, which is tested by a Malvern particle size meter. The Malvern particle size meter uses the scattering phenomenon of the particles to light, to comprehensively calculate the particle size distribution of the particles under test according to the distribution of the scattered light energy.

Those skilled in the art will appreciate that the lithium ion battery preparation method described above is only an embodiment. Other methods commonly used in the art can be employed without departing from the scope of the present disclosure.

The embodiments of the present application are further illustrated by the following several examples. The embodiments herein are not limited to the specific examples described below. Variations may be made as appropriate within the scope of the independent claims.

In the following Examples and Comparative Examples, the dispersibility N of the conductive enhancers were obtained by the following test method:
The anode materials prepared were made SEM section, the SEM section of single the anode material particle was divided into regions with area of 1 micron × 1 micron, counting the distribution of the conductive enhancer within all of the regions of single the anode material particle, seting number of regions having the conductive enhancer with a spacing to each other of <10 nm as Na, seting number of regions having the conductive enhancer with a spacing to each other all of ≥10 nm as Nb, and defining dispersibility C of the conductive enhancer in single the anode material particle as C = Nb/Na, where N is the arithmetic average of C values of any 5 of the anode material particles.

### Example 1

The preparation method of anode material of this example including the following:
(1) A multi-walled carbon nanotube having an aspect ratio of 500, a tensile strength of 65 GPa, and an electrical conductivity of 1.5*10⁶ S/m was added to absolute ethanol in a mass of 5%, milled for 5 h for dispersing to obtain a dispersion. Then nano-silicon having a median particle diameter of 100 nm, the dispersion, polyacrylic acid, and phenolic resin in a mass ratio of 40:3.9:1.6:15.9 were added to an ethylene glycol solution, ultrasonicated for 60 min, then grinded and dispersed for 9 h in a ball mill, to obtain a precursor solution; then a spray drying process was performed at a drying temperature of 190°Cfor 3 h, to obtain a precursor.
(2) The precursor was placed in a fusion machine having a rotating speed of 450 r/min; the blade gap width of fusion machine used for the mechanical fusion was 0.8 cm; the time of the mechanical fusion was 1 h. The fused material was subjected to a heat treatment at a temperature of 890°C under nitrogen protection, keeping temperature for 4 h, to obtain an aggregate.
(3) The aggregate was mixed with asphalt in a mass ratio of 100:49. Then the mixed material was placed into a high temperature box furnace, a nitrogen gas was introduced, and a carbon coating process was performed at 820°C, keeping temperature for 4 h, followed by crushing, and sieving through a 500 mesh screen, and an anode material was obtained.

The anode material prepared by this Example includes an aggregate and a carbon layer coated on surface of the aggregate, and the aggregates includes nano-silica powder, multi-walled carbon nanotube, and carbon material, the mass ratio of nano-silica powder, multi-walled carbon nanotube, and carbon material is 49.6:2.6:47.8, the multi-walled carbon nanotube is distributed within the aggregate.

The anode material has a median particle diameter of 13.2 µm, a specific surface area of 3.3 m²/g, and a carbon layer thickness of 450 nm.

The dispersibility N of the conductive enhancer (multi-walled carbon nanotubes) is 9.5 tested by the test method of the dispersibility N of the conductive enhancer described above.

The anode material was tested by a mercury intrusion method, resulting in a porosity of the anode material of 3.9%.

The anode material was tested by a nanoindentation, resulting in a pressure-resistant hardness of the anode material of 231 MPa in average. The difference between the test density of the anode material and the average density of the silicon powder and the carbon material is 3.2%.

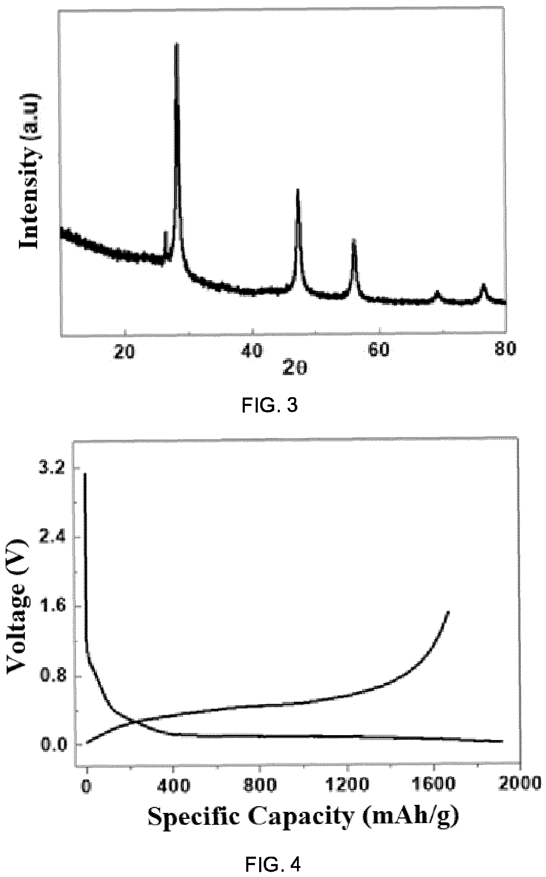

FIG. 2 is a scanning electron microscope (SEM) photo of anode material prepared by Example 1 of the present application, and FIG. 3 is an XRD pattern of anode material prepared by Example 1 of the present application. As shown in FIG. 3, there is a peak of silicon peak in the anode material.

### Example 2

The preparation method of anode material of this example including the following:
(1) A graphite fiber having an aspect ratio of 100, a tensile strength of 1.5 GPa, and an electrical conductivity of 1.2*10⁵ S/m was added to absolute ethanol in a mass of 3%, milled for 10 h for dispersing to obtain a dispersion. Then nano-silicon having a median particle diameter of 30 nm, the dispersion, oleic acid, and sucrose in a mass ratio of 30:1.9:5.6:25.9 were added to an ethanol solution, ultrasonicated for 50 min, then grinded and dispersed for 7 h in a ball mill, to obtain a precursor solution; then a spray drying process was performed at a drying temperature of 150°Cfor 3 h, to obtain a precursor.
(2) The precursor was placed in a fusion machine having a rotating speed of 650 r/min; the blade gap width of fusion machine used for the mechanical fusion was 0.4 cm; the time of the mechanical fusion was 3 h. The fused material was subjected to a heat treatment at a temperature of 980°C under argon protection, keeping temperature for 2 h, to obtain an aggregate.
(3) The aggregate was mixed with phenolic resin in a mass ratio of 70:55. Then the mixed material was placed into a high temperature box furnace, a nitrogen gas was introduced, and a carbon coating process was performed at 840°C, keeping temperature for 4 h, followed by crushing, and sieving through a 500 mesh screen, and an anode material was obtained.

The anode material prepared by this Example includes an aggregate and a carbon layer coated on surface of the aggregate, and the aggregates includes nano-silica powder, graphite fiber, and carbon material, the mass ratio of nano-silica powder, graphite fiber, and carbon material is 55.6:6.2:38.2, the graphite fiber is distributed within the aggregate.

The anode material has a median particle diameter of 12.8 µm, a specific surface area of 4.7 m²/g, and a carbon layer thickness of 320 nm.

The dispersibility N of the conductive enhancer (multi-walled carbon nanotubes) is 14 tested by the test method of the dispersibility N of the conductive enhancer described above.

The anode material was tested by a mercury intrusion method, resulting in a porosity of the anode material of 4.5%.

The anode material was tested by a nanoindentation, resulting in a pressure-resistant hardness of the anode material of 128 MPa in average. The difference between the test density of the anode material and the average density of the silicon powder and the carbon material is 2.9%.

### Example 3

The preparation method of anode material of this example including the following:
(1) A single-walled carbon nanotube having an aspect ratio of 2000, a tensile strength of 129 GPa, and an electrical conductivity of 3*10⁶ S/m was added to a mixed solution of water and ethanol (water:ethanol mass ratio = 1:1) in a mass of 2%, milled for 10 h for dispersing to obtain a dispersion. Then nano-silicon having a median particle diameter of 60 nm, the dispersion, decanoic acid, and fructose in a mass ratio of 40:2.9:3.6:36.9 were added to an ethylene glycol solution, ultrasonicated for 70 min, then grinded and dispersed for 5 h in a ball mill, to obtain a precursor solution; then a spray drying process was performed at a drying temperature of 200°Cfor 1.5 h, to obtain a precursor
(2) The precursor was placed in a fusion machine having a rotating speed of 300 r/min; the blade gap width of fusion machine used for the mechanical fusion was 0.5 cm; the time of the mechanical fusion was 1 h. The fused material was subjected to a heat treatment at a temperature of 700°C under nitrogen protection, keeping temperature for 4 h, to obtain an aggregate.
(3) The aggregate was mixed with asphalt in a mass ratio of 100:47. Then the mixed material was placed into a high temperature box furnace, a nitrogen gas was introduced, and a carbon coating process was performed at 920°C, keeping temperature for 3 h, followed by crushing, and sieving through a 500 mesh screen, and an anode material was obtained.

The anode material prepared by this Example includes an aggregate and a carbon layer coated on surface of the aggregate, and the aggregates includes nano-silica powder, single-walled carbon nanotube, and carbon material, the mass ratio of nano-silica powder, single-walled carbon nanotube, and carbon material is 43.9:2.1:54.0, the single-walled carbon nanotube is distributed within the aggregate.

The anode material has a median particle diameter of 9.8 µm, a specific surface area of 5.3 m²/g, and a carbon layer thickness of 600 nm.

The dispersibility N of the conductive enhancer single-walled carbon nanotubes is 20 tested by the test method of the dispersibility N of the conductive enhancer described above.

The anode material was tested by a mercury intrusion method, resulting in a porosity of the anode material of 3.8%.

The anode material was tested by a nanoindentation, resulting in a pressure-resistant hardness of the anode material of 201 MPa in average. The difference between the test density of the anode material and the average density of the silicon powder and the carbon material is 1.9%.

### Example 4

The preparation method of anode material of this example including the following:
(1) A nickel silicon alloy having an aspect ratio of 55, a tensile strength of 502 MPa, and an electrical conductivity of 2.2*10² S/m was added to absolute ethanol in a mass of 5%, milled for 6 h for dispersing to obtain a dispersion. Then nano-silicon having a median particle diameter of 50 nm, the dispersion, sodium dodecyl benzene sulfonate and glucose in a mass ratio of 50:2.9:3.6:44.1 were added to an ethylene glycol solution, ultrasonicated for 50 min, then grinded and dispersed for 6 h in a ball mill, to obtain a precursor solution; then a spray drying process was performed at a drying temperature of 140°Cfor 3 h, to obtain a precursor.
(2) The precursor was placed in a fusion machine at a rotating speed of 600 r/min; the blade gap width of fusion machine used for the mechanical fusion was 0.45 cm; the time of the mechanical fusion was 2 h. The fused material was subjected to a heat treatment at a temperature of 790°C under argon protection, keeping temperature for 4 h, to obtain an aggregate.
(3) The aggregate was mixed with asphalt in a mass ratio of 100:37. Then the mixed material was placed into a high temperature box furnace, a nitrogen gas was introduced, and a carbon coating process was performed at 960°C, keeping temperature for 3 h, followed by crushing, and sieving through a 500 mesh screen, and an anode material was obtained

The anode material prepared by this Example includes an aggregate and a carbon layer coated on surface of the aggregate, and the aggregates includes nano-silica powder, nickel silicon alloy, and carbon material, the mass ratio of nano-silica powder, nickel silicon alloy, and carbon material is 46.9:2.8:50.3, the nickel silicon alloy is distributed within the aggregate.

The anode material has a median particle diameter of 12 µm, a specific surface area of 4.3 m²/g, and a carbon layer thickness of 580 nm.

The dispersibility N of the conductive enhancer (nickel-silicon alloy) is 11 tested by the test method of the dispersibility N of the conductive enhancer described above.

The anode material was tested by a mercury intrusion method, resulting in a porosity of the anode material of 5.2%.

The anode material was tested by a nanoindentation, resulting in a pressure-resistant hardness of the anode material of 109 MPa in average. The difference between the test density of the anode material and the average density of the silicon powder and the carbon material is 3.2%.

### Example 5

The preparation method of anode material of this example including the following:
(1) An iron silicon alloy having an aspect ratio of 35, a tensile strength of 560 MPa, and an electrical conductivity of 6.2*10² S/m was added to propanol in a mass of 5%, milled for 8 h for dispersing to obtain a dispersion. Then nano-silicon having a median particle diameter of 50 nm, the dispersion, polysorbate-80, and citric acid in a mass ratio of 49:3.9:4.6:34.1 were added to an ethylene glycol solution, ultrasonicated for 50 min, then grinded and dispersed for 6 h in a ball mill, to obtain a precursor solution; then a spray drying process was performed at a drying temperature of 120°Cfor 3 h, to obtain a precursor.
(2) The precursor was placed in a fusion machine having a rotating speed of 300 r/min; the blade gap width of fusion machine used for the mechanical fusion was 0.6 cm; the time of the mechanical fusion was 2 h. The fused material was subjected to a heat treatment at a temperature of 890°C under argon protection, keeping temperature for 4 h, to obtain an aggregate.
(3) The aggregate was mixed with asphalt in a mass ratio of 100:44. Then the mixed material was placed into a high temperature box furnace, a nitrogen gas was introduced, and a carbon coating process was performed at 920°C, keeping temperature for 3 h, followed by crushing, and sieving through a 500 mesh screen, and an anode material was obtained.

The anode material prepared by this Example includes an aggregate and a carbon layer coated on surface of the aggregate, and the aggregates includes nano-silica powder, iron-silicon alloy, and carbon material, the mass ratio of nano-silica powder, iron-silicon alloy, and carbon material is 50.4:3.8:45.8, the iron-silicon alloy is distributed within the aggregate.

The anode material has a median particle diameter of 15 µm, a specific surface area of 3 m²/g, and a carbon layer thickness of 430 nm.

The dispersibility N of the conductive enhancer (multi-walled carbon nanotubes) is 33 tested by the test method of the dispersibility N of the conductive enhancer described above.

The anode material was tested by a mercury intrusion method, resulting in a porosity of the anode material of 2.6%.

The anode material was tested by a nanoindentation, resulting in a pressure-resistant hardness of the anode material of 188 MPa in average. The difference between the test density of the anode material and the average density of the silicon powder and the carbon material is 2.1%.

### Example 6

The preparation method of anode material of this example including the following:
(1) A copper silicon alloy having an aspect ratio of 45, a tensile strength of 679 MPa, and an electrical conductivity of 4.2*10³ S/m was added to propanol in a mass of 2.5%, milled for 4 h for dispersing to obtain a dispersion. Then Ge particles having a median particle diameter of 50 nm, the dispersion, polysorbate-20, and citric acid in a mass ratio of 78:2.9:3.6:44.1 were added to an ethylene glycol solution, ultrasonicated for 90 min, then grinded and dispersed for 3 h in a ball mill, to obtain a precursor solution; then a spray drying process was performed at a drying temperature of 180°Cfor 3 h, to obtain a precursor.
(2) The precursor was placed in a fusion machine having a rotating speed of 600 r/min; the blade gap width of fusion machine used for the mechanical fusion was 0.5 cm; the time of the mechanical fusion was 2 h. The fused material was subjected to a heat treatment at a temperature of 890°C under argon protection, keeping temperature for 4 h, to obtain an aggregate.
(3) The aggregate was mixed with asphalt in a mass ratio of 100:34. Then the mixed material was placed into a high temperature box furnace, a nitrogen gas was introduced, and a carbon coating process was performed at 950°C, keeping temperature for 3 h, followed by crushing, and sieving through a 500 mesh screen, and an anode material was obtained.

The anode material prepared by this Example includes an aggregate and a carbon layer coated on surface of the aggregate, and the aggregates includes nano-Ge powder, copper silicon alloy, and carbon material, the mass ratio of nano-Ge powder, copper silicon alloy, and carbon material is 67.4:4.8:26.8, the copper silicon alloy is distributed within the aggregate.

The anode material has a median particle diameter of 14.8 µm, a specific surface area of 3.9 m²/g, and a carbon layer thickness of 206 nm.

The dispersibility N of the conductive enhancer (copper silicon alloy) is 13 tested by the test method of the dispersibility N of the conductive enhancer described above.

The anode material was tested by a mercury intrusion method, resulting in a porosity of the anode material of 5.6%.

The anode material was tested by a nanoindentation, resulting in a pressure-resistant hardness of the anode material of 345 MPa in average. The difference between the test density of the anode material and the average density of the silicon powder and the carbon material is 3.8%.

### Example 7

The preparation method of anode material of this example including the following:
(1) A carbon fiber having an aspect ratio of 350, a tensile strength of 4.2 GPa, and an electrical conductivity of 5.6 S/m was added to butanol in a mass of 3%, milled for 6 h for dispersing to obtain a dispersion. Then Sn particles having a median particle diameter of 120 nm, the dispersion, cocoanut fatty acid diethanolamide, and sucrose in a mass ratio of 90:6.9:2.6:26.1 were added to an ethanol solution, ultrasonicated for 100 min, then grinded and dispersed for 4 h in a ball mill, to obtain a precursor solution; then a spray drying process was performed at a drying temperature of 150°Cfor 3 h, to obtain a precursor.
(2) The precursor was placed in a fusion machine at a rotating speed of 600r/min; the blade gap width of fusion machine used for the mechanical fusion was 0.7 cm; the time of the mechanical fusion was 2 h. The fused material was subjected to a heat treatment at a temperature of 890°C under argon protection, keeping temperature for 2 h, to obtain an aggregate.
(3) The aggregate was mixed with phenolic resin in a mass ratio of 100:45. Then the mixed material was placed into a high temperature box furnace, a nitrogen gas was introduced, and a carbon coating process was performed at 950°C, keeping temperature for 3 h, followed by crushing, and sieving through a 500 mesh screen, and an anode material was obtained.

The anode material prepared by this Example includes an aggregate and a carbon layer coated on surface of the aggregate, and the aggregates includes nano-Sn powder, carbon fiber, and carbon material, the mass ratio of nano-Sn powder, carbon fiber, and carbon material is 69.5:4.5:26.0, the carbon fiber is distributed within the aggregate.

The anode material has a median particle diameter of 12.8 µm, a specific surface area of 5.9 m²/g, and a carbon layer thickness of 160 nm.

The dispersibility N of the conductive enhancer (carbon fiber) is 24 tested by the test method of the dispersibility N of the conductive enhancer described above.

The anode material was tested by a mercury intrusion method, resulting in a porosity of the anode material of 3.1%.

The anode material was tested by a nanoindentation, resulting in a pressure-resistant hardness of the anode material of 289 MPa in average. The difference between the test density of the anode material and the average density of the silicon powder and the carbon material is 1.5%.

### Example 8

The preparation method of anode material of this example including the following:
(1) A carbon nanotube having an aspect ratio of 900, a tensile strength of 55 GPa, and an electrical conductivity of 5.2*10⁶ S/m was added to butanol in a mass of 3%, milled for 12 h for dispersing to obtain a dispersion. Then Si particles having a median particle diameter of 80 nm, the dispersion, SiO having an aspect ratio of 18, γ-methacryloxypropyl trimethoxy silane, and sucrose in a mass ratio of 50:3.9:3.0:6.6:33.1 were added to an ethanol solution, ultrasonicated for 120 min, then grinded and dispersed for 8 h in a ball mill, to obtain a precursor solution; then a spray drying process was performed at a drying temperature of 140°Cfor 3 h, to obtain a precursor.
(2) The precursor was placed in a fusion machine having a rotating speed of 1000 r/min; the blade gap width of fusion machine used for the mechanical fusion was 0.8 cm; the time of the mechanical fusion was 2 h. The fused material was subjected to a heat treatment at a temperature of 890°C under argon protection, keeping temperature for 2 h, to obtain an aggregate.
(3) The aggregate was mixed with phenolic resin in a mass ratio of 100:55. Then the mixed material was placed into a high temperature box furnace, a nitrogen gas was introduced, and a carbon coating process was performed at 950°C, keeping temperature for 8 h, followed by crushing, and sieving through a 500 mesh screen, and an anode material was obtained.

The anode material prepared by this Example includes an aggregate and a carbon layer coated on surface of the aggregate, and the aggregates includes nano-Si powder, carbon nanotube, SiO, and carbon material, the mass ratio of nano-Si powder, carbon nanotube, SiO, and carbon material is 46.2:2.5:6.5:44.8, the carbon nanotube is distributed within the aggregate.

The anode material has a median particle diameter of 9.8 µm, a specific surface area of 4.3 m²/g, and a carbon layer thickness of 460 nm.

The dispersibility N of the conductive enhancer (carbon nanotube) is 25 tested by the test method of the dispersibility N of the conductive enhancer described above.

The anode material was tested using a mercury intrusion method and the anode material a porosity of 4.5%.

The anode material was tested by a nanoindentation, resulting in a pressure-resistant hardness of the anode material of 142 MPa in average. The difference between the test density of the anode material and the average density of the silicon powder and the carbon material is 3.2%.

### Example 9

The anode material was prepared based on the method basically same as Example 1, excepting that, no additive (polyacrylic acid) was added. In step (1), nano-silicon having a median particle diameter of 100 nm, multi-walled carbon nanotube having an aspect ratio of 500 and a tensile strength of 65 GPa, and phenolic resin in a mass ratio of 40:3.9:15.9 were added to an ethylene glycol solution, ultrasonicated for 60 min, then grinded and dispersed for 9 h in a ball mill, to obtain a precursor solution; then a spray drying process was performed at a drying temperature of 190°Cfor 3 h, to obtain a precursor

The anode material prepared by this Example includes an aggregate and a carbon layer coated on surface of the aggregate, and the aggregates includes nano-silica powder, multi-walled carbon nanotube, and carbon material, the mass ratio of nano-silica powder, multi-walled carbon nanotube, and carbon material is 49.6:2.6:47.8, the multi-walled carbon nanotube is distributed within the aggregate.

The anode material has a median particle diameter of 13.2 µm, a specific surface area of 3.3 m²/g, and a carbon layer thickness of 450 nm.

The dispersibility N of the conductive enhancer (multi-walled carbon nanotubes) is 7.4 tested by the test method of the dispersibility N of the conductive enhancer described above.

The anode material was tested by a mercury intrusion method, resulting in a porosity of the anode material of 6.9%.

The anode material was tested by a nanoindentation, resulting in a pressure-resistant hardness of the anode material of 205 MPa in average. The difference between the test density of the anode material and the average density of the silicon powder and the carbon material is 3.1%.

### Example 10

This example differed from Example 1 in that, step (2) is different. The step (2) is specifically that to the precursor was subjected to a heat treatment at a temperature of 890°C under nitrogen protection, keeping temperature for 4 h, to obtain an aggregate.

The anode material prepared by this Example includes an aggregate and a carbon layer coated on surface of the aggregate, and the aggregates includes nano-silica powder, multi-walled carbon nanotube, and carbon material, the mass ratio of nano-silica powder, multi-walled carbon nanotube, and carbon material is 49.6:2.6:47.8, the multi-walled carbon nanotube is distributed within the aggregate.

The anode material has a median particle diameter of 13.2 µm, a specific surface area of 3.3 m²/g, and a carbon layer thickness of 450 nm.

The dispersibility N of the conductive enhancer (multi-walled carbon nanotubes) is 10 tested by the test method of the dispersibility N of the conductive enhancer described above.

The anode material was tested by a mercury intrusion method, resulting in a porosity of the anode material of 10.5%.

The anode material was tested by a nanoindentation, resulting in a pressure-resistant hardness of the anode material of 45 MPa in average. The difference between the test density of the anode material and the average density of the silicon powder and the carbon material is 2.2%.

### Example 11

The preparation method of anode material of this example including the following:
(1) A multi-walled carbon nanotube having an aspect ratio of 500, a tensile strength of 65 GPa, and an electrical conductivity of 1.5*10⁶ S/m was added to absolute ethanol in a mass of 5%, milled for 5 h for dispersing. Then nano-silicon having a median particle diameter of 100 nm, the multi-walled carbon nanotube, and phenolic resin in a mass ratio of 40:3.9:15.9 were added to an ethylene glycol solution, ultrasonicated for 60 min, then grinded and dispersed for 9 h in a ball mill, to obtain a precursor solution; then a spray drying process was performed at a drying temperature of 190°Cfor 3 h, to obtain a precursor.
(2) The precursor was subjected to a heat treatment at a temperature of 890°C under nitrogen protection, keeping temperature for 4 h, to obtain an aggregate.
(3) The aggregate was mixed with asphalt in a mass ratio of 100:49. Then the mixed material was placed into a high temperature box furnace, a nitrogen gas was introduced, and a carbon coating process was performed at 820°C, keeping temperature for 4 h, followed by crushing, and sieving through a 500 mesh screen, and an anode material was obtained.

The anode material prepared by this Example includes an aggregate and a carbon layer coated on surface of the aggregate, and the aggregates includes nano-silica powder, multi-walled carbon nanotube, and carbon material, the mass ratio of nano-silica powder, multi-walled carbon nanotube, and carbon material is 49.6:2.6:47.8, the multi-walled carbon nanotube is distributed within the aggregate.

The anode material has a median particle diameter of 13.2 µm, a specific surface area of 3.3 m²/g, and a carbon layer thickness of 450 nm.

The dispersibility N of the conductive enhancer (multi-walled carbon nanotubes) is 9 tested by the test method of the dispersibility N of the conductive enhancer described above.

The anode material was tested by a mercury intrusion method, resulting in a porosity of the anode material of 11.4%.

The anode material was tested by a nanoindentation, resulting in a pressure-resistant hardness of the anode material of 26 MPa in average. The difference between the test density of the anode material and the average density of the silicon powder and the carbon material is 4.4%.

### Example 12

The preparation method of anode material of this example including the following:
(1) A multi-walled carbon nanotube having an aspect ratio of 500, a tensile strength of 65 GPa, and an electrical conductivity of 1.5*10⁶ S/m was added to absolute ethanol in a mass of 5%, milled for 5 h for dispersing to obtain a dispersion. Then nano-silicon having a median particle diameter of 100 nm, the dispersion, TiO₂ particles having an aspect ratio of 17, and phenolic resin in a mass ratio of 40:3.9:0.5:15.9 were added to an ethylene glycol solution, ultrasonicated for 60 min, then grinded and dispersed for 9 h in a ball mill, to obtain a precursor solution; then a spray drying process was performed at a drying temperature of 190°Cfor 3 h, to obtain a precursor
(2) The precursor was subjected to a heat treatment at a temperature of 890°C under nitrogen protection, keeping temperature for 4 h, to obtain an aggregate.
(3) The aggregate was mixed with asphalt in a mass ratio of 100:49. Then the mixed material was placed into a high temperature box furnace, a nitrogen gas was introduced, and a carbon coating process was performed at 820°C, keeping temperature for 4 h, followed by crushing, and sieving through a 500 mesh screen, and an anode material was obtained.

The anode material prepared by this Example includes an aggregate and a carbon layer coated on surface of the aggregate, and the aggregates includes nano-silica powder, multi-walled carbon nanotube, TiO₂ particles, and carbon material, the mass ratio of nano-silica powder, multi-walled carbon nanotube, TiO₂ particles, and carbon material is 49.6:2.6:2.0:46.8, the multi-walled carbon nanotube is distributed within the aggregate.

The anode material has a median particle diameter of 12 µm, a specific surface area of 6.8 m²/g, and a carbon layer thickness of 450 nm.

The dispersibility N of the conductive enhancer (multi-walled carbon nanotubes) is 8.8 tested by the test method of the dispersibility N of the conductive enhancer described above.

The anode material was tested by a mercury intrusion method, resulting in a porosity of the anode material of 9.8%.

The anode material was tested by a nanoindentation, resulting in a pressure-resistant hardness of the anode material of 55 MPa in average. The difference between the test density of the anode material and the average density of the silicon powder and the carbon material is 3.9%.

### Example 13

The preparation method of anode material of this example including the following:
(1) A multi-walled carbon nanotube having an aspect ratio of 500, a tensile strength of 65 GPa, and an electrical conductivity of 1.5*10⁶ S/m was added to absolute ethanol in a mass of 5%, milled for 5 h for dispersing to obtain a dispersion. Then nano-silicon having a median particle diameter of 50 nm, the dispersion, and phenolic resin in a mass ratio of 15:1:10 were added to an ethylene glycol solution, ultrasonicated for 60 min, then grinded and dispersed for 9 h in a ball mill, to obtain a precursor solution; then a spray drying process was performed at a drying temperature of 190°Cfor 3 h, to obtain a precursor.
(2) The precursor was placed in a fusion machine having a rotating speed of 800 r/min; the blade gap width of fusion machine used for the mechanical fusion was 0.8 cm; the time of the mechanical fusion was 1 h. The fused material was subjected to a heat treatment at a temperature of 1000°C under nitrogen protection, keeping temperature for 3 h, to obtain an aggregate.
(3) The aggregate was mixed with asphalt in a mass ratio of 15:10. Then the mixed material was placed into a high temperature box furnace, a nitrogen gas was introduced, and a carbon coating process was performed at 1000°C, keeping temperature for 4 h, followed by crushing, and sieving through a 500 mesh screen, and an anode material was obtained.

The anode material prepared by this Example includes an aggregate and a carbon layer coated on surface of the aggregate, and the aggregates includes nano-silica powder, multi-walled carbon nanotube, and carbon material, the mass ratio of nano-silica powder, multi-walled carbon nanotube, and carbon material is 58.2:2.1:39.7, the multi-walled carbon nanotube is distributed within the aggregate.

The anode material has a median particle diameter of 14.3 µm, a specific surface area of 2.8 m²/g, and a carbon layer thickness of 380 nm.

The dispersibility N of the conductive enhancer (multi-walled carbon nanotubes) is 1.4 tested by the test method of the dispersibility N of the conductive enhancer described above.

The anode material was tested by a mercury intrusion method, resulting in a porosity of the anode material of 2.7%.

The anode material was tested by a nanoindentation, resulting in a pressure-resistant hardness of the anode material of 164 MPa in average. The difference between the test density of the anode material and the average density of the silicon powder and the carbon material is 2.0%.

### Example 14

The preparation method of anode material of this example including the following:
(1) A multi-walled carbon nanotube having an aspect ratio of 500, a tensile strength of 65 GPa, and an electrical conductivity of 1.5*10⁶ S/m was added to a mixed solution of liquid ammonia and water (volume ratio 1:1) in a mass of 1.0%, milled for 8 h for dispersing to obtain a dispersion. Then nano-Sn having a median particle diameter of 50 nm, the dispersion, and phenolic resin in a mass ratio of 120:2:50 were added to an ethylene glycol solution, ultrasonicated for 60 min, then grinded and dispersed for 9 h in a ball mill, to obtain a precursor solution; then a spray drying process was performed at a drying temperature of 190°Cfor 3 h, to obtain a precursor.
(2) The precursor was placed in a fusion machine having a rotating speed of 800 r/min; the blade gap width of fusion machine used for the mechanical fusion was 0.8 cm; the time of the mechanical fusion was 1 h. The fused material was subjected to a heat treatment at a temperature of 890°C under nitrogen protection, keeping temperature for 3 h, to obtain an aggregate.
(3) The aggregate was mixed with asphalt in a mass ratio of 100:50. Then the mixed material was placed into a high temperature box furnace, a nitrogen gas was introduced, and a carbon coating process was performed at 800°C, keeping temperature for 4 h, followed by crushing, and sieving through a 500 mesh screen, and an anode material was obtained.

The anode material prepared by this Example includes an aggregate and a carbon layer coated on surface of the aggregate, and the aggregates includes nano-Sn powder, multi-walled carbon nanotube, and carbon material, the mass ratio of nano-Sn powder, multi-walled carbon nanotube, and carbon material is 69.5:1.1:29.4, the multi-walled carbon nanotube is distributed within the aggregate.

The anode material has a median particle diameter of 16 µm, a specific surface area of 3.7 m²/g, and a carbon layer thickness of 144 nm.

The dispersibility N of the conductive enhancer (multi-walled carbon nanotubes) is 45 tested by the test method of the dispersibility N of the conductive enhancer described above.

The anode material was tested by a mercury intrusion method, resulting in a porosity of the anode material of 3.7%.

The anode material was tested by a nanoindentation, resulting in a pressure-resistant hardness of the anode material of 199 MPa in average. The difference between the test density of the anode material and the average density of the silicon powder and the carbon material is 1.5%.

### Example 15

This example differed from Example 1 in that, no carbon coating was performed, and step (3) was not included.

The anode material prepared by this Example includes an aggregate, and the aggregates includes nano-silica powder, multi-walled carbon nanotube, and carbon material, the mass ratio of nano-silica powder, multi-walled carbon nanotube, and carbon material is 49.6:2.6:47.8, the multi-walled carbon nanotube is distributed within the aggregate.

The anode material has a median particle diameter of 13.2 µm, a specific surface area of 3.3 m²/g, and a carbon layer thickness of 450 nm.

The dispersibility N of the conductive enhancer (multi-walled carbon nanotubes) is 9.8 tested by the test method of the dispersibility N of the conductive enhancer described above.

The anode material was tested by a mercury intrusion method, resulting in a porosity of the anode material of 9.8%.

The anode material was tested by a nanoindentation, resulting in a pressure-resistant hardness of the anode material of 67 MPa in average. The difference between the test density of the anode material and the average density of the silicon powder and the carbon material is 3.7%.

### Example 16

The anode material was prepared based on the method basically same as Example 1, excepting that the aspect ratio of the conductive enhancer was 1.9.

The difference from Example 1 was also that no carbon coating was performed, and step (3) was not included.

The anode material prepared by this Example includes an aggregate, and the aggregates includes nano-silica powder, multi-walled carbon nanotube, and carbon material, the mass ratio of nano-silica powder, multi-walled carbon nanotube, and carbon material is 49.6:2.6:47.8, the multi-walled carbon nanotube is distributed within the aggregate.

The anode material has a median particle diameter of 13.2 µm, a specific surface area of 3.3 m²/g, and a carbon layer thickness of 450 nm.

The dispersibility N of the conductive enhancer (multi-walled carbon nanotubes) is 11 tested by the test method of the dispersibility N of the conductive enhancer described above.

The anode material was tested by a mercury intrusion method, resulting in a porosity of the anode material of 3.5%.

The anode material was tested by a nanoindentation, resulting in a pressure-resistant hardness of the anode material of 89 MPa in average. The difference between the test density of the anode material and the average density of the silicon powder and the carbon material is 2.9%.

### Comparative Example 1

The anode material was prepared based on the method basically same as Example 4, excepting that a nickel silicon material having a tensile strength of 253 MPa was used.

The anode material prepared by this example includes an aggregate, and the aggregates includes nano-silica powder, nickel silicon material, and carbon material, the mass ratio of nano-silica powder, nickel silicon material, and carbon material is 46.9:2.6:47.8, the nickel silicon material is distributed within the aggregate.

The anode material has a median particle diameter of 13.2 µm, a specific surface area of 3.3 m²/g, and a carbon layer thickness of 450 nm.

The dispersibility N of the conductive enhancer (nickel-silicon alloy) is 7.9 tested by the test method of the dispersibility N of the conductive enhancer described above.

The anode material was tested by a mercury intrusion method, resulting in a porosity of the anode material of 7.2%.

The anode material was tested by a nanoindentation, resulting in a pressure-resistant hardness of the anode material of 48 MPa in average. The difference between the test density of the anode material and the average density of the silicon powder and the carbon material is 2.7%.

### Comparative Example 2

The anode material was prepared based on the method basically same as Example 1, excepting that the conductive enhancer was not added.

The anode material prepared by this Example includes an aggregate, and the aggregates includes nano-silica powder, multi-walled carbon nanotube, and carbon material, the mass ratio of nano-silica powder, multi-walled carbon nanotube, and carbon material is 49.6:2.6:47.8, the multi-walled carbon nanotube is distributed within the aggregate.

The anode material has a median particle diameter of 13.2 µm, a specific surface area of 3.3 m²/g, and a carbon layer thickness of 450 nm.

The anode material was tested by a mercury intrusion method, resulting in a porosity of the anode material of 4.3%.

The anode material was tested by a nanoindentation, resulting in a pressure-resistant hardness of the anode material of 102 MPa in average. The difference between the test density of the anode material and the average density of the silicon powder and the carbon material is 2.5%.

### Comparative Example 3

The anode material was prepared based on the method basically same as Example 1, excepting that the raw materials were not grinded and dispersed in step (1).

The anode material prepared by this Example includes an aggregate, and the aggregates includes nano-silica powder, multi-walled carbon nanotube, and carbon material, the mass ratio of nano-silica powder, multi-walled carbon nanotube, and carbon material is 49.6:2.6:47.8, the multi-walled carbon nanotube is distributed within the aggregate.

The anode material has a median particle diameter of 13.2 µm, a specific surface area of 3.3 m²/g, and a carbon layer thickness of 450 nm.

The dispersibility N of the conductive enhancer (multi-walled carbon nanotubes) is 0.2 tested by the test method of the dispersibility N of the conductive enhancer described above.

The anode material was tested by a mercury intrusion method, resulting in a porosity of the anode material of 6.9%.

The anode material was tested by a nanoindentation, resulting in a pressure-resistant hardness of the anode material of 114 MPa in average. The difference between the test density of the anode material and the average density of the silicon powder and the carbon material is 3.3%.

### Test Methods

### (1) button cell testing

Electrochemical cycling performance was tested as following: dissolving the silicon carbon composite anode material, a conductive agent, and a binders in a mass percent of 94:1:5 in a solvent for mixing, controlling solid content to be 50%, then applying to a copper foil current collector, vacuum drying, to prepare an anode pole piece; and then assembling a 18650 cylindrical single cell by conventional production process by further using a ternary cathode pole piece prepared by a conventional production process, 1mol/L of electrolyte including LiPF₆/ethylene carbonate + dimethyl carbonate + methyl ethyl carbonate (v/v=1:1:1), Celgard 2400 separator, and shell. The lithium ion battery was measured the initial thickness H0 of the pole piece using a micrometer. The charge and discharge testing of the lithium ion battery was performed by a LAND cell test system produced by Wuhan Jinnuo Electronics Co., Ltd, under room temperature conditions, charging and discharging at 0.2C constant current, and the charge and discharge voltage was controlled to 2.75 V to 4.2 V, thus obtaining the initial reversible capacity, the initial charging capacity and the initial discharge capacity. The initial coulombic efficiency = the initial discharge capacity / the initial charge capacity.

The cycling was repeated for 50 times. The lithium ion battery was measured the thickness H1 of the pole piece at this time using a micrometer, the expansion ratio after 50 cycles = (H1-H0)/H0×100%.

The cycling was repeated for 100 times. The discharge capacity was recorded as the remaining capacity of lithium ion battery; the capacity retention rate = the remaining capacity / the initial capacity * 100%.

(2) The aspect ratio of the conductive enhancer and the metal oxide: the aspect ratio of the conductive enhancer and the metal oxide was tested by AFM. The conductive enhancer and metal oxide were performed an ultrasonic dispersion, then droped on a glass slide for preparing a sample, dried, and placed for AFM testing. The length L, width W, or particle size Y of no less than 100 conductive enhancer and metal oxide were tested, individual aspect ratio D = L/W, or D = L/Y, the average value of the 100 one was calculated to obtain the aspect ratio of the sample.

### (3) Test density of anode material:

A empty bottle was weighed as mass m, which was filled with distilled water, and weighed at this time as mass m1; then the bottle was washed, dried, added a certain amount of anode material, and recorded the total mass at this time as m2, then added distilled water for full filled, the mass was weighed as m3. The volume of the bottle V1 = (m1-m)/ρ1, the volume of the anode material v2 = (m2-m3)/ρ1, test density of the anode material ρ2= (m3-m)/(V-V1), where ρ1 was the density of distilled water.

### (4) Tensile strength of conductive enhancer:

The tensile strength of the conductive enhancer was tested by a tensile tester.

The results of the above performance tests are shown in Table 1:

**Table 1**

| Sample | Aspect ratio of conductive enhancer | Tensile strength of conductive enhancer (MPa) | Dispersion of conductivity enhancer | Initial reversible capacity (mAh/g ) | Initial Coulombic efficiency (%) | 100 cycle capacity retention (%) | 50 Cycles expansion ratio of pole piece (%) |
|---|---|---|---|---|---|---|---|
| Example 1 | 500 | 65000 | 9.5 | 1450 | 89.1 | 93.1 | 35.1% |
| Example 2 | 100 | 1500 | 14 | 1708 | 86.2 | 92.1 | 39.5% |
| Example 3 | 2000 | 129000 | 20 | 1341 | 88.9 | 94.1 | 34.5% |
| Example 4 | 55 | 502 | 11 | 1441 | 88.7 | 92.8 | 35.9% |
| Example 5 | 35 | 560 | 33 | 1643 | 87.2 | 92.9 | 38.6% |
| Example 6 | 45 | 679 | 13 | 1109 | 88.1 | 94.2 | 31.3% |
| Example 7 | 350 | 4200 | 10 | 870 | 85.9 | 92.1 | 33.3% |
| Example 8 | 900 | 55000 | 25 | 1389 | 88.7 | 94.5 | 35.0% |
| Example 9 | 500 | 65000 | 7.4 | 1489 | 87.8 | 87.5 | 45.2% |
| Example 10 | 500 | 65000 | 10 | 1483 | 85.8 | 83.9 | 47.2% |
| Example 11 | 500 | 65000 | 28 | 1440 | 89.0 | 86.1 | 43.1% |
| Example 12 | 500 | 65000 | 8.8 | 1410 | 88.5 | 87.3 | 40.1% |
| Example 13 | 500 | 65000 | 10.4 | 1650 | 86.1 | 91.6 | 43.7% |
| Example 14 | 500 | 65000 | 45 | 730 | 86.1 | 92.6 | 33.7% |
| Example 15 | 500 | 65000 | 9.8 | 1550 | 84.1 | 85.1 | 41.1% |
| Example 16 | 1.9 | 65000 | 11 | 1560 | 84.0 | 83.1 | 42.3% |
| Comparative Example 1 | 55 | 235 | 7.9 | 1430 | 89.3 | 91.1 | 48.1% |
| Comparative Example 2 | 500 | -- | 0 | 1413 | 86.9 | 86.9 | 48.2% |
| Comparative Example 3 | 500 | 65000 | 0.2 | 1414 | 89.9 | 88.1 | 47.9% |

FIG. 4 is a graph of initial charge/discharge curve of anode material material prepared by Example 1 of the present application. As shown in FIG. 4, the anode material prepared in Example 1 has a higher initial charge and discharge capacity and a higher initial efficiency, since the conductive enhancer in the anode material improves transport of charge carrier inside the aggregate, and enhances conductivity of the aggregate, such that the anode material has an excellent electrochemical property.

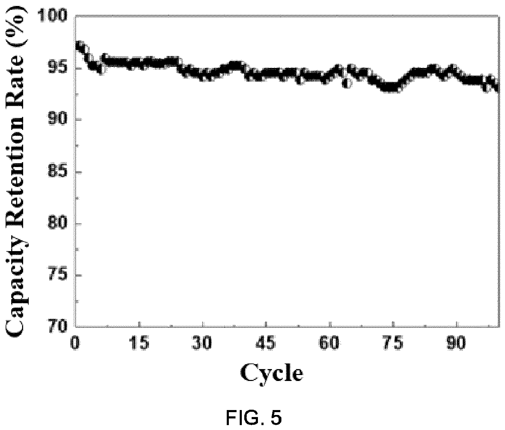

FIG. 5 is a graph of cycling performance curve of anode material material prepared by Example 1 of the present application. As shown in FIG. 5, the anode material has an excellent cycling performance, the cycling 100 peripheral capacity retention is 93.1%, since the conductive enhancer can effectively improve the structure stability of the aggregate, thus strengthening structure strength of the aggregate, avoding stress change caused by expansion effect of the active material, maintaining structure stability of the aggregate, thereby improving cycle stability performance of the material, and decreasing the expansion rate.

As shown in Table 1, the anode materials prepared by Examples 1 to 8 include aggregate, where the aggregate includes an active material, a conductive enhancer, and a carbon material. The conductive enhancer is distributed within the aggregate, which effectively improve transport of charge carrier inside the aggregate, enhancing conductivity of the aggregate. Moreover, the conductive enhancer can effectively improve the structure stability of the aggregate, thus strengthening structure strength of the aggregate, avoding stress change caused by expansion effect of the active material, maintaining structure stability of the aggregate, thereby improving cycle stability performance of the material, and decreasing the expansion rate.

Among them, the anode material of Example 9 was not added an additive during the preparation process, thus the connection between the active particles and the carbon material as well as the conductive enhancer is not firm, thus structure stability of the aggregate obtained decreases, and inhibition effect for buffering the expansion decreases.

Among them, the conductive enhancer in step (1) was not grinded and dispersed during the preparation of the anode material of Comparative Example 3, mixing uniformity of the active material, the conductive enhancer, and the carbon material decreases, the conductive enhancer is not sufficiently dispersed in the raw material, resulting in a significant decreasing in minimum spacing between the conductive enhancers in the aggregate of anode material, which does not facilitate to form a network structure between the conductive enhancer and the carbon material. Moreover, the structure strength of the aggregate decreases, it is difficult to resist the stress changes caused by the expansion of the active material, and the expansion rate increases.

Among them, the tensile strength of the conductive enhancer in step (1) was 48 MPa during the preparation of the anode material of Comparative Example 1. The tensile strength of the conductive enhancer is too low, it is difficult for the conductive enhancer to resist the stress change caused by the expansion of the active material, and to maintain the structure stability of the aggregate, which does not facilitate to improve the cycling performance of the material, and the expansion rate of the battery increases.

The anode material of Comparative Example 2 was not added a conductive enhancer during the preparation process. The aggregate includes only active material and carbon material, such that the conductivity of the aggregate decreases, the transport efficiency of charge carriers inside the aggregate decreases, the stress caused by the expansion of the active material causes the aggregate structure to break easily, it is difficult for the conductive enhancer to resist the stress change caused by the expansion of the active material, and to maintain the structure stability of the aggregate, which does not facilitate to improve the cycling performance of the material, and the expansion rate of the battery increases.

The conductive enhancer in step (1) was not grinded and dispersed during the preparation of the anode material of Comparative Example 3, the dispersion of the conductive enhancer is only 0.2, the expansion rate of the pole piece is high.

The conductive enhancer had an aspect ratio of 1.9 during the preparation of the anode material of Comparative Example 16, the bond between the conductive enhancer and the active material is not firm, the overall structure tends to be loose, the structure strength of the aggregate decreases, it is difficult to resist the stress changes caused by the expansion of the active material, and the expansion rate increases.

While the present application has been disclosed in terms of preferred embodiments above, but not for limitation of claims, it will be apparent to those skilled in the art that various changes and modifications can be made without departing from the concepts of the present application, and the scope of the present application shall be accorded the broadest scope as defined by the following claims.

## Claims

1. An anode material, **characterized in that** the anode material comprises an aggregate, the aggregate comprises an active material, a carbon material, and a conductive enhancer; wherein the conductive enhancer has a tensile strength of ≥500 MPa, and a dispersibility N in the anode material of ≥1;
wherein the dispersibility N is obtained by the following test method:
dividing a SEM section of an anode material particle into regions with area of A×B, wherein A and B are both ≤1 micron, counting the distribution of the conductive enhancer within all of the regions of single the anode material particle, seting number of regions having the conductive enhancer with a spacing to each other of <10 nm as Na, seting number of regions having the conductive enhancer with a spacing to each other all of ≥10 nm as Nb, and defining dispersibility C of the conductive enhancer in single the anode material particle as C = Nb/Na, wherein N is the arithmetic average of C values of any 5 of the anode material particles.

2. The anode material of claim 1, **characterized in that** the aggregate further comprises a metal oxide.

3. The anode material of claim 1 or 2, **characterized in that** the anode material comprises one of the following features (1) to (5):
(1) the conductive enhancer is distributed in the active material, and the carbon material is filled between the active material and the conductive enhancer;
(2) there are pores between the carbon material and the conductive enhancer, and the pores are filled with the active material;
(3) the active material comprises at least one of Li, Na, K, Sn, Ge, Si, SiO, Fe, Mg, Ti, Zn, Al, P, and Cu;
(4) the active material has a median particle diameter of 1 nm to 500 nm; and
(5) the carbon material comprises at least one of amorphous carbon, crystalline carbon, hard carbon, soft carbon, and mesocarbon microbead.

4. The anode material of any one of claims 1 to 3, **characterized in that** the anode material comprises at least one of the following features (1) to (6):
(1) the conductive enhancer comprises at least one of an alloy material and a conductive carbon;
(2) the conductive enhancer comprises at least one of an alloy material and a conductive carbon, the conductive carbon comprises at least one of carbon nanotube, carbon fiber, and graphite fiber;
(3) a mass ratio of the active material, the carbon material, and the conductive enhancer is (20-70):(10-70):(3-20);
(4) the conductive enhancer is in a form of sheet and/or strip shape;
(5) the conductive enhancer has an aspect ratio of 2 to 3000; and
(6) the conductive enhancer has a conductivity of >10² S/m.

5. The anode material of claim 2, **characterized in that** the anode material comprises at least one of the following features (1) to (4):
(1) the metal oxide has a chemical formula of MₓO_{y}, 0.2≤y/x≤3, wherein M comprises at least one of Sn, Ge, Si, Fe, Cu, Ti, Na, Mg, AI, Ca, and Zn;
(2) the metal oxide is in a form of sheet and/or strip shape;
(3) the metal oxide has an aspect ratio greater than 2; and
(4) a mass ratio of the metal oxide and the active material is (1-20): 100.

6. The anode material of any one of claims 1 to 5, **characterized in that** the anode material comprises at least one of the following features (1) to (7):
(1) the anode material further comprises a carbon layer coated on at least a portion of surface of the aggregate;
(2) the anode material further comprises a carbon layer coated on at least a portion of surface of the aggregate, and a material of the carbon layer comprises amorphous carbon;
(3) the anode material further comprises a carbon layer coated on at least a portion of surface of the aggregate, and the carbon layer has a thickness of 10 nm to 1500 nm;
(4) the anode material has a median particle diameter of 0.5 µm to 30 µm;
(5) the anode material has a specific surface area of ≤10 m²/g;
(6) the anode material has a porosity of ≤10%, and a pressure-resistant hardness of ≥50 MPa; and
(7) density of the anode material satisfies the following relationship: (ρ1-ρ2)/ρ2≤5%, wherein ρ1 is test density of the anode material, ρ2 is average density of the anode material, and ρ2 is a sum of mass percentage of each component in the anode material * theoretical density of each component.

7. A preparation method of anode material, **characterized in that** the preparation method comprises the following:
adding a conductive enhancer having a tensile strength of £500 MPa to a first solvent and dispersing to obtain a dispersion;
mixing an active material, the dispersion, a first carbon source, and a second solvent to prepare a precursor; and
undergoing the precursor a primary heat treatment at 600°C to 1200°C to obtain an aggregate.

8. The preparation method of claim 7, **characterized in that** the preparation method comprises at least one of the following features (1) to (15):
(1) the active material comprises at least one of Li, Na, K, Sn, Ge, Si, SiO, Fe, Mg, Ti, Zn, Al, P, and Cu;
(2) the first carbon source comprises at least one of sucrose, glucose, polyethylene, polyvinyl alcohol, polyethylene glycol, polyaniline, epoxy resin, phenolic resin, furfural resin, acrylic resin, polyethylene oxide, polyvinylidene fluoride, polyacrylonitrile, polyvinyl chloride, and asphalt;
(3) the conductive enhancer comprises at least one of an alloy material and a conductive carbon;
(4) the conductive enhancer comprises at least one of an alloy material and a conductive carbon, the conductive carbon comprises at least one of carbon nanotube, carbon fiber, and graphite fiber;
(5) the conductive enhancer is in a form of sheet and/or strip shape;
(6) the conductive enhancer has an aspect ratio of 2 to 3000;
(7) the conductive enhancer has a conductivity of >10² S/m;
(8) a mass ratio of the active material, the conductive enhancer, and the first carbon source is (15-120): (1-20): (10-50);
(9) the first solvent comprises at least one of an organic solvent, an inorganic solvent, and a mixed solvent formed by mixing organic solvent and inorganic solvent;
(10) the second solvent comprises an organic solvent;
(11) an additive is further added in the process of mixing an active material, the dispersion, a first carbon source, and a second solvent to prepare a precursor;
(12) an additive is further added in the process of mixing an active material, the dispersion, a first carbon source, and a second solvent to prepare a precursor, and the additive comprises at least one of a surfactant, and a coupling agent;
(13) an additive is further added in the process of mixing an active material, the dispersion, a first carbon source, and a second solvent to prepare a precursor, and a mass ratio of the active material and the additive is (15-120):(1-10);
(14) a metal oxide is further added in the process of mixing an active material, the dispersion, a first carbon source, and a second solvent; and
(15) preparing the precursor further comprises performing at least one of dispersion treatment and drying treatment after mixing the active material, the dispersion, the first carbon source, and the second solvent.

9. The preparation method of claim 8, **characterized in that** the preparation method comprises at least one of the following features (1) to (10):
(1) the organic solvent comprises at least one of methanol, ethanol, ethylene glycol, propanol, isopropanol, glycerol, n-butanol, isobutanol, and pentanol;
(2) the inorganic solvent comprises at least one of water, liquid carbon dioxide, liquid ammonia, liquid sulfur dioxide, thionyl chloride, sulfonyl chloride, lead acetate, hydrogen cyanide, hydrazine hydrate, sulfuryl chloride fluoride, cuprammonium solution, sulfuric acid, nitric acid, hydrogen fluoride, polyphosphoric acid, and super acid;
(3) the surfactant comprises at least one of n-octadecanoic acid, lauric acid, polyacrylic acid, sodium dodecyl benzene sulfonate, n-eicosanoic acid, palmitic acid, tetradecanoic acid, undecanoic acid, cetyl trimethyl ammonium bromide, and polyvinyl pyrrolidone;
(4) the coupling agent comprises a silane coupling agent, wherein the silane coupling agent comprising γ-aminopropyl triethoxy silane, γ-glycidoxypropyl trimethoxy silane, γ-methacryloxypropyl trimethoxy silane;
(5) the metal oxide has a chemical formula of MₓO_{y}, 0.2≤y/x≤3, wherein M comprises at least one of Sn, Ge, Si, Fe, Cu, Ti, Na, Mg, AI, Ca, and Zn;
(6) the metal oxide is in a form of sheet and/or strip shape;
(7) the metal oxide has an aspect ratio greater than 2;
(8) a mass ratio of the metal oxide and the active material is (1-20):100;
(9) the dispersion treatment comprises at least one of mechanical stirring, ultrasonic dispersion, and grinding dispersion; and
(10) a temperature of the drying treatment is 30°C to 400°C, and a time of the drying treatment is 1 h to 15 h.

10. The preparation method of any one of claims 7 to 9, **characterized in that** the preparation method comprises at least one of the following features (1) to (4):
(1) before undergoing the precursor a primary heat treatment, the preparation method further comprises undergoing the precursor a densification treatment, such that the aggregate has a porosity of ≤10% and a pressure-resistant hardness of ≥50 MPa;
(2) before undergoing the precursor a primary heat treatment, the preparation method further comprises undergoing the precursor a densification treatment, such that the aggregate has a porosity of ≤10% and a pressure-resistant hardness of ≥50 MPa, and the densification treatment comprises at least one of a fusion process, a blending process, a moulding process, an isostatic pressing process, and an impregnation process;
(3) a time of the primary heat treatment is 1 h to 10 h; and
(4) a protective gas is introduced during the primary heat treatment.

11. The preparation method of claim 10, **characterized in that** the preparation method comprises at least one of the following features (1) to (5):
(1) the fusion process is mechanical fusion;
(2) the fusion process is mechanical fusion, and a rotating speed of fusion machine used for the mechanical fusion is 300 r/min to 3000 r/min;
(3) the fusion process is mechanical fusion, and a blade gap width of fusion machine used for the mechanical fusion is from 0.01 cm to 0.9 cm;
(4) the fusion process is mechanical fusion, and a time of the mechanical fusion is at least 0.5 h; and
(5) the protective gas comprises at least one of nitrogen, helium, neon, argon, and krypton.

12. The preparation method of any one of claims 7 to 11, **characterized in that** the preparation method comprises at least one of the following features (1) to (2):
(1) the preparation method further comprises undergoing the aggregate a carbon coating process; and
(2) the preparation method further comprises undergoing the aggregate a carbon coating process, and the carbon coating process comprises mixing the precursor with a second carbon source for secondary heat treatment.

13. The preparation method of claim 12, **characterized in that** the preparation method comprises at least one of the following features (1) to (6):
(1) a mass ratio of the precursor and the second carbon source is (20-100):(10-80);
(2) the second carbon source comprises at least one of sucrose, glucose, polyethylene, polyvinyl alcohol, polyethylene glycol, polyaniline, epoxy resin, phenolic resin, furfural resin, acrylic resin, polyethylene oxide, polyvinylidene fluoride, polyacrylonitrile, polyvinyl chloride, and asphalt;
(3) a mass ratio of the aggregate and the second carbon source is (15-100):(10-70);
(4) a temperature of the secondary heat treatment is 600°C to 1200°C, and a time of the secondary heat treatment is 1 h to 10 h;
(5) a protective gas is introduced during the secondary heat treatment; and
(6) a protective gas is introduced during the secondary heat treatment, and the protective gas comprises at least one of nitrogen, helium, neon, argon, and krypton.

14. A lithium ion battery, **characterized in that** the lithium ion battery comprises an anode material according to any one of claims 1 to 6 or an anode material prepared by the preparation method according to any one of claims 7 to 13.
